# EUROPEAN PATENT SPECIFICATION

(11) **EP 3 796 576 B1**
(45) Date of publication and mention of the grant of the patent: **07.08.2024**
(21) Application number: 19802925.8
(22) Date of filing: 16.05.2019
(51) Int. Cl.: H04W 74/0816, H04L 5/00

(54) **SIGNAL LISTENING METHODS, RELATED DEVICE, COMPUTER READABLE MEDIA AND SYSTEM**
SIGNALHÖRVERFAHREN, ZUGEHÖRIGE VORRICHTUNG, COMPUTERLESBARE MEDIEN UND SYSTEM
PROCÉDÉS D'ÉCOUTE DE SIGNAL, DISPOSITIF ASSOCIÉ, SUPPORTS LISIBLE PAR ORDINATEUR ET SYSTÈME

(30) Priority: 18.05.2018 CN 201810483194
(43) Date of publication of application: 24.03.2021
(73) Proprietor: HUAWEI TECHNOLOGIES CO., LTD., Shenzhen, Guangdong 518129 (CN)
(72) Inventor: JIA, Qiong, Shenzhen, Guangdong 518129 (CN); ZHU, Jun, Shenzhen, Guangdong 518129 (CN); WU, Ji, Shenzhen, Guangdong 518129 (CN)
(74) Representative: Thun, Clemens
(86) International application number: PCT/CN2019/087238
(87) International publication number: WO 2019/219060

(56) References cited:
- CN-A- 107 623 919
- CN-A- 107 809 805
- CN-A- 108 029 144
- MEDIATEK INC: "Discussions on LAA frame structure design and LAA- WIFI coexistence", vol. RAN WG1, no. Athens, Greece; 20150209 - 20150213, 30 January 2015 (2015-01-30), XP050948704, Retrieved from the Internet <URL:http://www.3gpp.org/ftp/tsg_ran/WG1_RL1/TSGR1_80/Docs/> [retrieved on 20150130]
- HUAWEI ET AL.: "Further analysis on the required functionalities for LAA", 3GPP TSG RAN WG1 MEETING #79 R1-144590, vol. RAN WG1, 17 November 2014 (2014-11-17) - 21 November 2014 (2014-11-21), XP050875680
- HUAWEI ET AL.: "Coexistence and channel access for NR unlicensed band operations,", 3GPP TSG RAN WG1 MEETING #93 R1-1805919, vol. RAN WG1, 11 May 2018 (2018-05-11), XP051461629

## Description

### TECHNICAL FIELD

This application relates to the field of wireless communications technologies, and in particular, to signal sensing methods applied to an unlicensed frequency band, a related device, computer readable media and a system.

### BACKGROUND

Currently, in an LAA/eLAA system, whether a channel is busy is determined through physical carrier sensing. Specifically, before transmitting data, a sending device needs to sense a channel. After the channel is idle and a corresponding backoff procedure is completed, the sending device obtains a corresponding maximum channel occupancy time (maximum channel occupancy time, MCOT), and may send the data within the time.

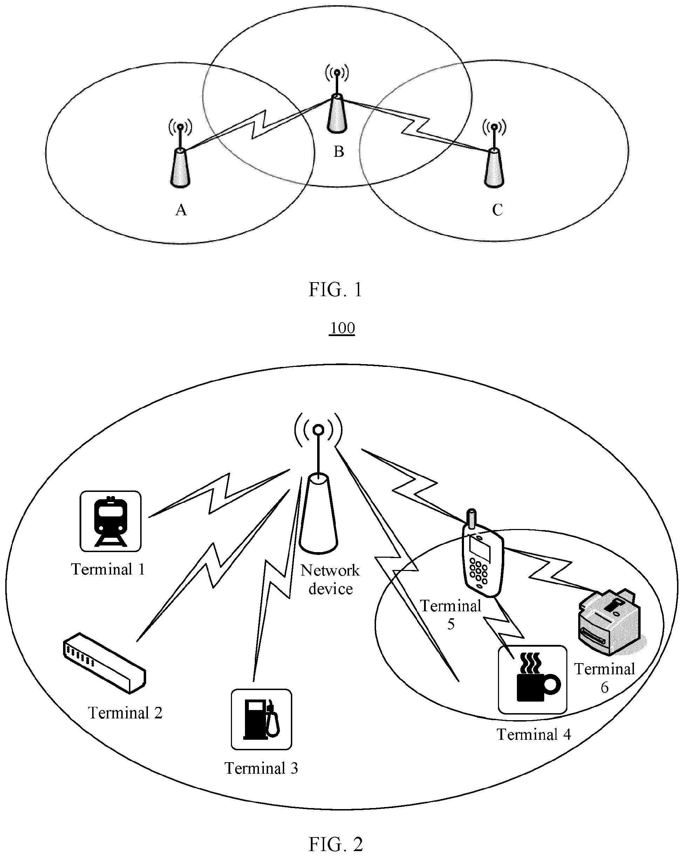

However, referring to FIG. 1, a device A and a device C use only a physical carrier sensing mechanism. To be specific, the device A and the device C determine a channel state by detecting energy at a physical layer and cannot detect that the other party is transmitting data. Consequently, a collision occurs when the device A and the device C receive a signal from a device B. In particular, a device collision problem becomes severer in a high frequency band due to introduction of a directional beam and a directional listen before talk (Listen before talk) mechanism.
The document MEDIATEK INC: "Discussions on LAA frame structure design and LAA - WIFI coexistence", R1-150577 shows details of proposed look before talk mechanisms.
The document Huawei et al.: "Further analysis on the required functionalities for LAA", R1-144590 is also a standardization document dealing with advanced look before talk mechanisms.
The document Huawei et al.: "coexistence and channel access for NR unlicensed band operations", R1-1805919 is also a standardization document, which deals with advanced look before talk mechanisms.

### SUMMARY

This application provides channel sensing methods, a related device, computer readable media and a system, so that a collision between devices that need to perform transmission can be avoided, thereby improving communication efficiency.

According to a first aspect, this application provides a channel sensing method applied to a sending device. The method may be applied to a network device side or a terminal side. The method includes: performing, by the sending device, LBT; and sending, by the sending device, a first channel occupancy signal after the LBT succeeds, where the first channel occupancy signal is used to indicate, to a first receiving device that receives the first channel occupancy signal, a to-be-protected channel occupancy time on a channel occupied by the sending device after the LBT succeeds. The first channel occupancy signal includes first information, and the first information is used to indicate a part of the first receiving device to respond to the first channel occupancy signal, so that the first receiving device sends a second channel occupancy signal, and the second channel occupancy signal is used to indicate, to a second receiving device that receives the second channel occupancy signal, the to-be-protected channel occupancy time on the channel occupied by the sending device after the LBT succeeds.

In a possible design, the sending device obtains a maximum channel occupancy time MCOT after the LBT, the maximum channel occupancy time includes one or more intervals, and the sending device sends the first channel occupancy signal before one of the one or more intervals.

In another possible design, the second channel occupancy signal is sent before one of the one or more intervals.

In another possible design, the sending device sends a channel release signal, and the channel release signal is used to indicate the first receiving device or the second receiving device to release the to-be-protected channel occupancy time indicated by the first channel occupancy signal.

According to a second aspect, this application provides a channel sensing method applied to a receiving device. The method may be applied to a network device side or a terminal side. The method includes: receiving, by the receiving device, a first channel occupancy signal from a sending device, where the first channel occupancy signal is used to indicate, to the receiving device, a to-be-protected channel occupancy time on a channel occupied by the sending device after LBT succeeds. The first channel occupancy signal includes first information, and the first information is used to indicate the receiving device to respond to the first channel occupancy signal, so that the receiving device sends a second channel occupancy signal based on the specific indication information, and the second channel occupancy signal is used to indicate, to one or more other receiving devices that receive the second channel occupancy signal, a the to-be-protected channel occupancy time on the channel occupied by the sending device after the LBT succeeds.

In a possible design, the sending device obtains a maximum channel occupancy time MCOT after the LBT, the maximum channel occupancy time includes one or more intervals, and the receiving device receives the first channel occupancy signal before one of the one or more intervals.

In another possible design, the second channel occupancy signal is sent before one of the one or more intervals.

In another possible design, the receiving device further receives a channel release signal from the sending device, and the channel release signal is used to indicate the one or more other receiving devices to release the to-be-protected channel occupancy time indicated by the first channel occupancy signal; and the receiving device sends a release acknowledgement signal in response to the release signal, and the release acknowledgement signal is used to indicate the one or more other receiving devices to release the to-be-protected channel occupancy time indicated by the second channel occupation signal.

According to an example not covered by the invention, this application provides a sending device. The sending device may be a network device or a terminal, and the sending device includes a processor and a transceiver connected to the processor. The processor is configured to control the transceiver to perform LBT; and the processing is configured to control the transceiver to send a first channel occupancy signal after the LBT succeeds, where the first channel occupancy signal is used to indicate, to a first receiving device that receives the first channel occupancy signal, a to-be-protected channel occupancy time on a channel occupied by the sending device after the LBT succeeds. The first channel occupancy signal includes first information, and the first information is used to indicate a part of the first receiving device to respond to the first channel occupancy signal, so that the first receiving device sends a second channel occupancy signal, and the second channel occupancy signal is used to indicate, to a second receiving device that receives the second channel occupancy signal, the to-be-protected channel occupancy time on the channel occupied by the sending device after the LBT succeeds. The first channel occupancy signal includes first information, and the first information is used to indicate a part of the first receiving device to respond to the first channel occupancy signal, so that the first receiving device sends a second channel occupancy signal, and the second channel occupancy signal is used to indicate, to a second receiving device that receives the second channel occupancy signal, the to-be-protected channel occupancy time on the channel occupied by the sending device after the LBT succeeds.

In a possible design, the processor controls the transceiver to obtain a maximum channel occupancy time MCOT after the LBT succeeds, the maximum channel occupancy time includes one or more intervals, and the processor is configured to control the transceiver to send the first channel occupancy signal before one of the one or more intervals.

In another possible design, the first channel occupancy signal includes first information, and the first information is used to indicate a part of the first receiving device to respond to the first channel occupancy signal, so that the first receiving device sends a second channel occupancy signal, and the second channel occupancy signal is used to indicate, to a second receiving device that receives the second channel occupancy signal, the to-be-protected channel occupancy time on the channel occupied by the sending device after the LBT succeeds.

In another possible design, the second channel occupancy signal is sent before one of the one or more intervals.

In another possible design, the transceiver is further configured to send a channel release signal, and the channel release signal is used to indicate the first receiving device or the second receiving device to release the to-be-protected channel occupancy time indicated by the first channel occupancy signal.

According to a third aspect, this application provides a receiving device. The receiving device may be a network device or a terminal, and the receiving device includes a processor and a transceiver connected to the processor. The processor is configured to control the transceiver to receive a first channel occupancy signal from a sending device, and the first channel occupancy signal is used to indicate, to the receiving device, a to-be-protected channel occupancy time on a channel occupied by the sending device after LBT succeeds. The first channel occupancy signal includes first information, and the first information is used to indicate a part of the first receiving device to respond to the first channel occupancy signal, so that the first receiving device sends a second channel occupancy signal, and the second channel occupancy signal is used to indicate, to a second receiving device that receives the second channel occupancy signal, the to-be-protected channel occupancy time on the channel occupied by the sending device after the LBT succeeds.. The first channel occupancy signal includes first information, and the first information is used to indicate a part of the first receiving device to respond to the first channel occupancy signal, so that the first receiving device sends a second channel occupancy signal, and the second channel occupancy signal is used to indicate, to a second receiving device that receives the second channel occupancy signal, the to-be-protected channel occupancy time on the channel occupied by the sending device after the LBT succeeds.

In a possible design, the sending device obtains a maximum channel occupancy time MCOT after the LBT, the maximum channel occupancy time includes one or more intervals, and the transceiver is configured to receive the first channel occupancy signal before one of the one or more intervals.

In another possible design, the first channel occupancy signal includes first information, and the first information is used to indicate the receiving device to respond to the first channel occupancy signal. The processor is configured to control the transceiver to send a second channel occupancy signal based on the specific indication information, and the second channel occupancy signal is used to indicate, to one or more other receiving devices that receive the second channel occupancy signal, the to-be-protected channel occupancy time on the channel occupied by the sending device after the LBT succeeds.

In another possible design, the second channel occupancy signal is sent before one of the one or more intervals.

In another possible design, the transceiver further receives a channel release signal from the sending device, and the release signal is used to indicate the one or more other receiving devices to release the to-be-protected channel occupancy time indicated by the first channel occupancy signal. The processor is configured to control, in response to the release signal, the transceiver to send a release acknowledgement signal, and the release acknowledgement signal is used to indicate the one or more other receiving devices to release the to-be-protected channel occupancy time indicated by the second channel occupation signal.

According to an example not covered by the invention, a network device is provided. The network device includes a plurality of functional units, configured to correspondingly perform the method according to any one of the possible implementations of the first aspect or the third aspect.

According to an example not covered by the invention, a terminal is provided. The terminal includes a plurality of functional units, configured to correspondingly perform the method according to any one of the possible implementations of the second aspect or the fourth aspect.

According to an example not covered by the invention, a network device is provided. The network device is configured to perform the channel sensing method according to the first aspect or the third aspect. The network device may include a memory, and a processor, a transmitter, and a receiver that are coupled to the memory. The transmitter is configured to send a signal to another wireless communications device, for example, a terminal. The receiver is configured to receive the signal sent by the another wireless communications device, for example, the terminal. The memory is configured to store implementation code of the channel sensing method according to the first aspect or the second aspect. The processor is configured to execute program code stored in the memory, in other words, perform the channel sensing method according to any one of the possible implementations of the first aspect or the second aspect.

According to an example not covered by the invention, a terminal is provided. The terminal is configured to perform the channel sensing method according to the second aspect or the fourth aspect. The terminal may include a memory, and a processor, a transmitter, and a receiver that are coupled to the memory. The transmitter is configured to send a signal to another wireless communications device, for example, a network device. The receiver is configured to receive the signal sent by the another wireless communications device, for example, the network device. The memory is configured to store implementation code of the channel sensing method according to the first aspect or the second aspect. The processor is configured to execute program code stored in the memory, in other words, perform the channel sensing method according to any one of the possible implementations of the first aspect or the second aspect.

According to a fourth aspect, a communications system is provided. The communications system includes a network device and a terminal. The network device may be the foregoing network device. The terminal may be the foregoing terminal.

According to an example not covered by the invention, a computer-readable storage medium is provided. The readable storage medium stores an instruction, and when the instruction is run on a computer, the computer is enabled to perform the channel sensing method according to the first aspect or the second aspect.

According to an example not covered by the invention, another computer-readable storage medium is provided. The readable storage medium stores an instruction, and when the instruction is run on a computer, the computer is enabled to perform the channel sensing method according to the first aspect or the second aspect.

According to an example not covered by the invention, a computer program product including an instruction is provided. When the computer program product runs on a computer, the computer is enabled to perform the channel sensing method according to the first aspect or the second aspect.

According to an example not covered by the invention, another computer program product including an instruction is provided. When the computer program product runs on a computer, the computer is enabled to perform the channel sensing method according to the first aspect or the second aspect.

### BRIEF DESCRIPTION OF DRAWINGS

To describe technical solutions in embodiments of this application or in the background more clearly, the following describes the accompanying drawings for describing the embodiments of this application or the background.
FIG. 1 is a schematic architectural diagram of a wireless communications system in the prior art;
FIG. 2 is a schematic architectural diagram of a wireless communications system covered by the invention;
FIG. 3A and FIG. 3B are schematic diagrams of a type A/type B multi-carrier LBT mechanism covered by the invention;
FIG. 4 is a schematic structural diagram of a terminal covered by the invention;
FIG. 5 is a schematic structural diagram of a network device covered by the invention;
FIG. 6 is a schematic flowchart of a channel sensing method covered by the invention;
FIG. 7 is a schematic diagram of a to-be-protected channel occupancy time covered by the invention;
FIG. 8 is a schematic diagram of another to-be-protected channel occupancy time covered by the invention;
FIG. 9 is a schematic diagram of another to-be-protected channel occupancy time covered by the invention;

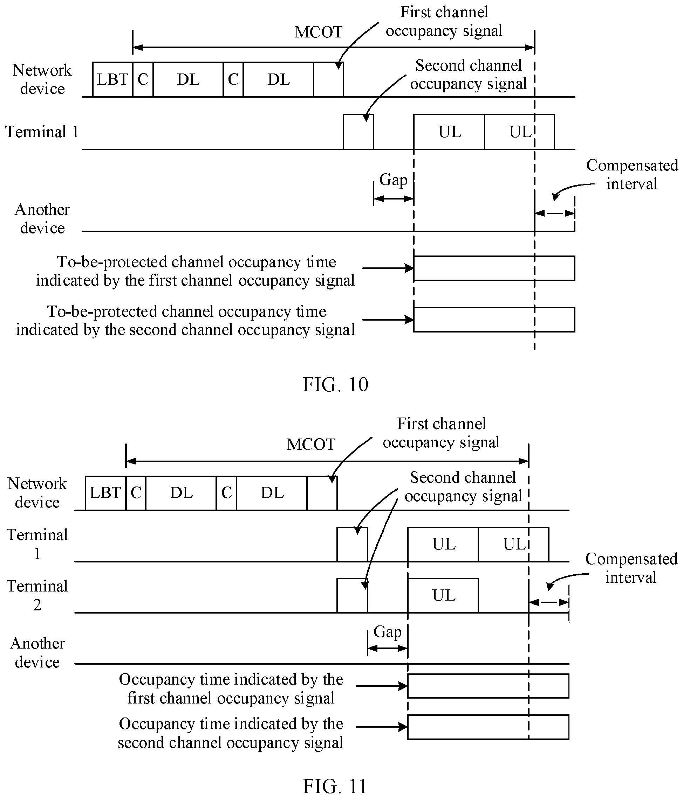

FIG. 10 is a schematic diagram of another to-be-protected channel occupancy time covered by the invention;
FIG. 11 is a schematic diagram of another to-be-protected channel occupancy time covered by the invention;
FIG. 12 is a schematic diagram of an application of a release signal covered by the invention;
FIG. 13 is a schematic diagram of an application of a release signal covered by the invention;
FIG. 14 is a schematic diagram of a sequence covered by the invention;
FIG. 15 is a functional block diagram of a wireless communications system, a terminal, and a network device covered by the invention; and
FIG. 16 is a schematic structural diagram of a processor covered by the invention.

### DESCRIPTION OF EMBODIMENTS

Terms used in implementations of this application are merely used to explain specific embodiments of this application, but are not intended to limit this application.

FIG. 2 shows a wireless communications system 100 in this application. The wireless communications system 100 may operate in a licensed frequency band or an unlicensed frequency band. It may be understood that use of the unlicensed frequency band can increase a system capacity of the wireless communications system 100. As shown in FIG. 2, the wireless communications system 100 includes one or more network devices (only one network device is shown in the figure), for example, a gNB, an eNodeB, or a WLAN access point, and one or more terminals (Terminal) 1 to 6.

The network device may be configured to communicate with the terminals 1 to 6 under control of a network device controller (for example, a base station controller) (not shown). In some embodiments, the network device controller may be a part of a core network (not shown), or may be integrated into the network device.

The network device may be configured to transmit control information (control information) or user data (user data) to the core network through a backhaul (backhaul) interface (for example, an S1 interface).

The network device may perform wireless communication with the terminal by using one or more antennas.

Network devices 101 may communicate with each other through a backhaul (backhaul) link 211 directly or indirectly. The backhaul link 211 herein may be a wired or wireless communication connection.

In some embodiments of this application, the network device 101 may include a base transceiver station (Base Transceiver Station), a radio transceiver, a basic service set (Basic Service Set, BSS), an extended service set (Extended Service Set, ESS), a NodeB, an eNodeB, a network device (such as a gNB), and the like. The wireless communications system 100 may include several different types of network devices 101, for example, a macro base station (macro base station) and a micro base station (micro base station). The network device 101 may use different wireless technologies, for example, a cell radio access technology or a WLAN radio access technology.

The terminal may be distributed in the entire wireless communications system 100, and may be static or mobile. In some embodiments of this application, the terminal may include but is not limited to a mobile device, a mobile station (mobile station), a mobile unit (mobile unit), a radio unit, a remote unit, a user agent, a mobile client, and the like. In this application, the terminal may also be understood as a terminal device.

In this application, the wireless communications system 100 may be an LTE communications system that can operate in the unlicensed frequency band, for example, an LTE-U system, or may be a new radio communications system that can operate in the unlicensed frequency band, for example, an NR-U system, or may be another communications system that operates in the unlicensed frequency band in the future.

In addition, the wireless communications system 100 may further include a Wi-Fi network.

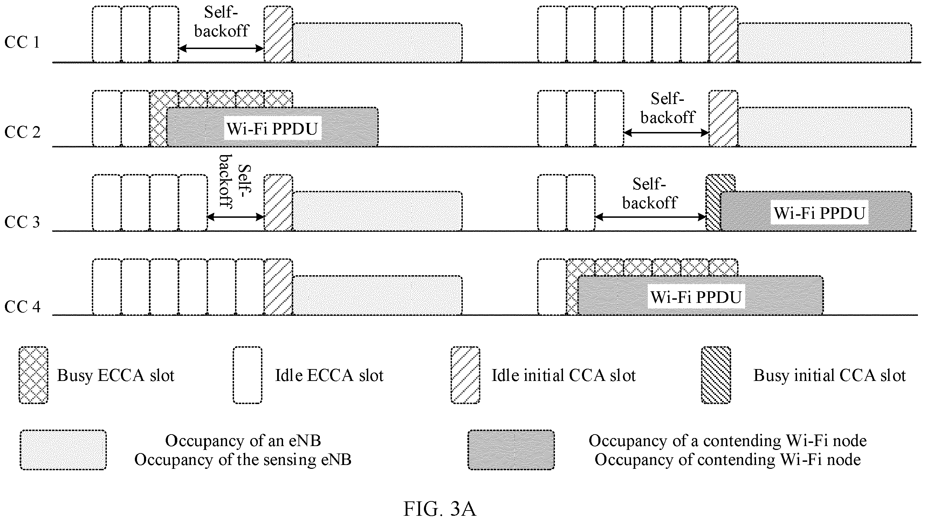

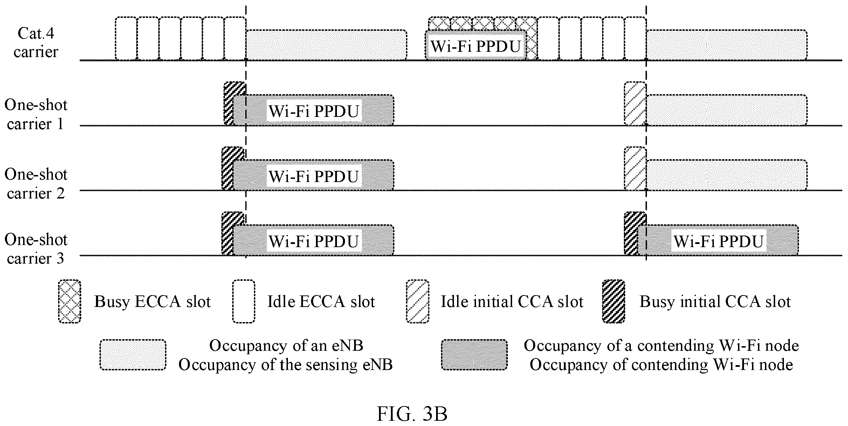

To ensure that the NR-U system coexists with another device that operates in the unlicensed frequency band, a channel contention access mechanism of LBT is used in the NR-U system, and a procedure and a parameter of the LBT are specified in 3GPP R13. FIG. 3A and FIG. 3B show two types of LBT sensing mechanisms.

As shown in FIG. 3A, a type-A (Type A) LBT device may perform independent backoff on a plurality of component carriers (component carrier, CC). When backoff is completed on a carrier, transmission is delayed to wait for another component carrier on which backoff is still performed. After backoff is completed on all carriers on which LBT is performed, the device needs to perform additional one-shot CCA (25 µs clear channel assessment) to ensure that all the carriers are idle. If all the carriers are idle, an eNB simultaneously performs transmission on the idle carriers.

As shown in FIG. 3B, a type-B (Type B) LBT device performs backoff only on a selected component carrier, and performs one-shot CCA (25 µs clear channel assessment) on another component carrier when the backoff is completed. If the component carrier is idle, data is transmitted; or if the component carrier is not idle, data cannot be transmitted on the component carrier this time.

As shown in FIG. 3A and FIG. 3B, a device that performs LBT may be an LTE LAA device, a Wi-Fi device, an NR-U device, or another communications device that operates in an unlicensed (unlicensed) frequency band. In the figure, the device that performs LBT is interfered with by a Wi-Fi system. In an actual scenario, the device that performs LBT may alternatively be interfered with by LTE LAA system, NR-U system, or another communications system that operates in the unlicensed frequency band. This is not limited in this application.

Not limited to FIG. 3A and FIG. 3B, an LBT sensing mechanism used in the NR-U system may also change. This does not affect implementation of this application.

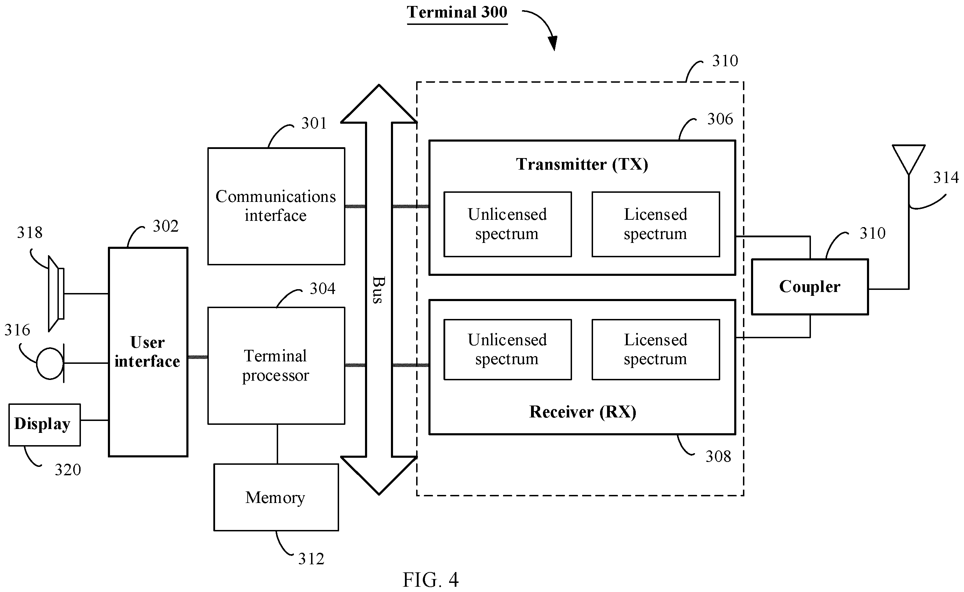

FIG. 4 shows a terminal 300 according to some embodiments of this application. As shown in FIG. 4, the terminal 300 may include input/output modules (including an audio input/output module 318, a key input module 316, a display 320, and the like), a user interface 302, one or more terminal processors 304, a transmitter 306, a receiver 308, a coupler 310, an antenna 314, and a memory 312. These components may be connected by using a bus or in another manner. In FIG. 4, an example in which these components are connected by using a bus is used.

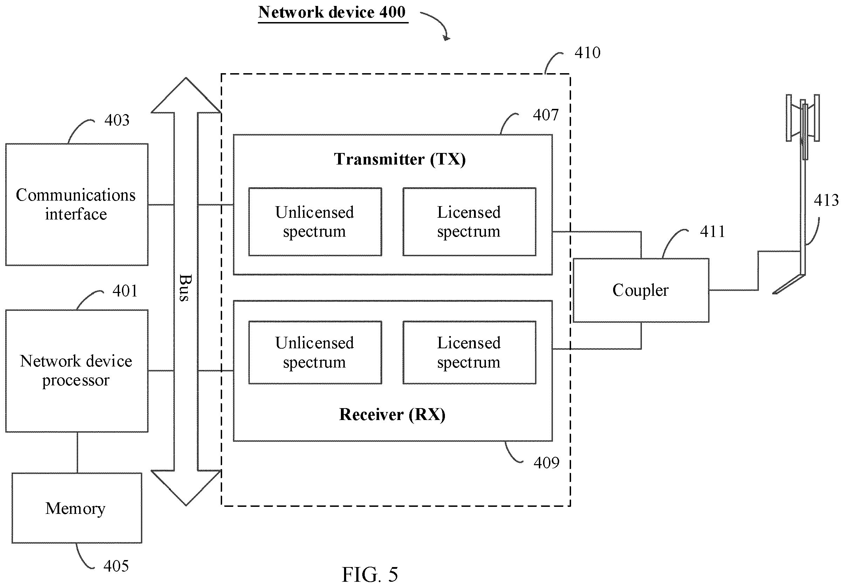

A communications interface 301 may be used by the terminal 300 to communicate with another communications device, for example, a base station. Specifically, the base station may be a network device 400 shown in FIG. 5. The communications interface 301 is an interface between the terminal processor 304 and a transceiver system (including the transmitter 306 and the receiver 308), for example, an X1 interface in LTE system. In specific implementation, the communications interface 301 may include one or more of a global system for mobile communications (Global System for Mobile Communications, GSM) (2G) communications interface, a wideband code division multiple access (Wideband Code Division Multiple Access, WCDMA) (3G) communications interface, a long term evolution (Long Term Evolution, LTE) (4G) communications interface, and the like, or may be a 4.5G, 5G, or future new radio communications interface. In addition to a wireless communications interface, a wired communications interface 301, for example, a local area network (Local Access Network, LAN) interface, may further be configured for the terminal 300.

The antenna 314 may be configured to convert electromagnetic energy in a transmission line into an electromagnetic wave in free space, or convert an electromagnetic wave in free space into electromagnetic energy in a transmission line. The coupler 310 is configured to: divide a mobile communication signal received by the antenna 314 into a plurality of signals, and allocate the plurality of signals to a plurality of receivers 308.

The transmitter 306 may be configured to perform transmission processing on a signal output by the terminal processor 304, for example, modulate the signal in a licensed or unlicensed frequency band. In other words, the transmitter 306 may support the terminal 300 in transmitting signals on one or more unlicensed spectrums, or may support the terminal 300 in transmitting signals on one or more licensed spectrums.

The receiver 308 may be configured to perform receiving processing on the mobile communication signal received by the antenna 314. For example, the receiver 308 may demodulate a received signal that has been modulated in an unlicensed or licensed frequency band. In other words, the receiver 308 may support the terminal 300 in receiving a signal that is modulated onto an unlicensed spectrum, or may support the terminal 300 in receiving a signal that is modulated onto a licensed spectrum.

In some embodiments of this application, the transmitter 306 and the receiver 308 may be considered as a wireless modem. In the terminal 300, there may be one or more transmitters 306 and one or more receivers 308.

In addition to the transmitter 306 and the receiver 308 shown in FIG. 4, the terminal 300 may further include other communications components, for example, a GPS module, a Bluetooth (Bluetooth) module, and a wireless fidelity (Wireless Fidelity, Wi-Fi) module. In addition to the foregoing wireless communication signal, the terminal 300 may further support other wireless communication signals, for example, a satellite signal and a shortwave signal. This application is not limited to wireless communication. A wired network interface (for example, a LAN interface) may further be configured for the terminal 300 to support wired communication.

The input/output modules may be configured to implement interaction between the terminal 300 and a user or an external environment, and may mainly include the audio input/output module 318, the key input module 316, the display 320, and the like. In specific implementation, the input/output modules may further include a camera, a touchscreen, a sensor, or the like. All the input/output modules communicate with the terminal processor 304 by using the user interface 302.

The memory 312 is coupled to the terminal processor 304, and is configured to store various software programs and/or a plurality of sets of instructions. In specific implementation, the memory 312 may include a high-speed random access memory, and may also include a nonvolatile memory, such as one or more disk storage devices, a flash memory device, or another nonvolatile solid-state storage device. The memory 312 may store an operating system (referred to as a system for short below), for example, an embedded operating system such as Android, iOS, Windows, or Linux. The memory 312 may further store a network communications program. The network communications program may be used to communicate with one or more additional devices, one or more terminal devices, and one or more network devices. The memory 312 may further store a user interface program. The user interface program may use a graphical operation interface to visually display content of an application program, and use input controls such as menus, dialog boxes, and keys to receive control operations of a user on an application program.

In some embodiments of this application, the memory 312 may be configured to store a program for implementing, on the terminal 300 side, a channel sensing method provided in one or more embodiments of this application. For implementation of the channel sensing method provided in one or more embodiments of this application, refer to the following embodiments.

The terminal processor 304 may be configured to read and execute a computer-readable instruction. Specifically, the terminal processor 304 may be configured to invoke a program stored in the memory 312, for example, the program for implementing, on the terminal 300 side, the channel sensing method provided in one or more embodiments of this application, and execute an instruction included in the program.

The terminal processor 304 may be a modem (Modem) processor, and is a module that implements main functions in wireless communications standards such as 3GPP and ETSI. The modem may be used as an independent chip, or may be combined with another chip or circuit to form a system-level chip or an integrated circuit. These chips or integrated circuits may be applied to all devices that implement a wireless communication function, including mobile phones, computers, laptops, tablets, routers, wearable devices, automobiles, and home appliances. It needs to be noted that, in different implementations, the terminal processor 304 may be used as an independent chip and is coupled to an off-chip memory, that is, the chip does not include a memory. Alternatively, the terminal processor 304 is coupled to an on-chip memory and is integrated into a chip, that is, the chip includes a memory.

It may be understood that the terminal 300 may be the terminal in the wireless communications system 100 shown in FIG. 2, and may be implemented as a mobile device, a mobile station (mobile station), a mobile unit (mobile unit), a radio unit, a remote unit, a user agent, a mobile client, or the like.

It needs to be noted that the terminal 300 shown in FIG. 4 is merely an implementation of this application. During actual application, the terminal 300 may alternatively include more or fewer components. This is not limited herein.

FIG. 5 shows a network device 400 according to some embodiments of this application. As shown in FIG. 5, the network device 400 may include a communications interface 403, one or more network device processors 401, a transmitter 407, a receiver 409, a coupler 411, an antenna 413, and a memory 405. These components may be connected by using a bus or in another manner. In FIG. 5, an example in which these components are connected by using a bus is used.

The communications interface 403 may be used by the network device 400 to communicate with another communications device, for example, a terminal device or another base station. The terminal device may specifically be the terminal 300 shown in FIG. 4. The communications interface 403 is an interface between the network device processor 401 and a transceiver system (including the transmitter 407 and the receiver 409), for example, an S1 interface in LTE system. In specific implementation, the communications interface 403 may include one or more of a global system for mobile communications (GSM) (2G) communications interface, a wideband code division multiple access (WCDMA) (3G) communications interface, a long term evolution (LTE) (4G) communications interface, and the like, or may be a 4.5G, 5G, or future new radio communications interface. In addition to a wireless communications interface, a wired communications interface 403 may further be configured for the network device 400 to support wired communication. For example, a backhaul link between one network device 400 and another network device 400 may be a wired communication connection.

The antenna 413 may be configured to convert electromagnetic energy in a transmission line into an electromagnetic wave in free space, or convert an electromagnetic wave in free space into electromagnetic energy in a transmission line. The coupler 411 may be configured to: divide a mobile communication signal into a plurality of signals, and allocate the plurality of signals to a plurality of receivers 409.

The transmitter 407 may be configured to perform transmission processing on a signal output by the network device processor 401, for example, modulate the signal in a licensed or unlicensed frequency band. In other words, the transmitter 407 may support the network device 400 in transmitting signals on one or more unlicensed spectrums, or may support the network device 400 in transmitting signals on one or more licensed spectrums.

The receiver 409 may be configured to perform receiving processing on the mobile communication signal received by the antenna 413. For example, the receiver 409 may demodulate a received signal that has been modulated in an unlicensed or licensed frequency band. In other words, the receiver 409 may support the network device 400 in receiving a signal that is modulated onto an unlicensed spectrum, or may support the network device 400 in receiving a signal that is modulated onto a licensed spectrum.

In some embodiments of this application, the transmitter 407 and the receiver 409 may be considered as a wireless modem. In the network device 400, there may be one or more transmitters 407 and one or more receivers 409.

The memory 405 is coupled to the network device processor 401, and is configured to store various software programs and/or a plurality of sets of instructions. In specific implementation, the memory 405 may include a high-speed random access memory, and may also include a nonvolatile memory, such as one or more disk storage devices, a flash memory device, or another nonvolatile solid-state storage device. The memory 405 may store an operating system (referred to as a system for short below), for example, an embedded operating system such as uCOS, VxWorks, or RTLinux. The memory 405 may further store a network communications program. The network communications program may be used to communicate with one or more additional devices, one or more terminal devices, and one or more network devices.

The network device processor 401 may be configured to: manage radio channels, establish or disconnect a call or communication link, control cross-cell handover of user equipment in a local control cell, and the like. In specific implementation, the network device processor 401 may include an administration module/communication module (Administration Module/Communication Module, AM/CM) (a center for speech channel switching and information exchange), a basic module (Basic Module, BM) (configured to implement call processing, signaling processing, radio resource management, radio link management, and circuit maintenance functions), a transcoder and submultiplexer (Transcoder and SubMultiplexer, TCSM) (configured to implement multiplexing/demultiplexing and transcoding functions), and the like.

In this application, the network device processor 401 may be configured to read and execute a computer-readable instruction. Specifically, the network device processor 401 may be configured to invoke a program stored in the memory 405, for example, a program for implementing, on a network device 400 side, a channel sensing method provided in one or more embodiments of this application, and execute an instruction included in the program.

The network device processor 401 may be a modem (Modem) processor, and is a module that implements main functions in wireless communications standards such as 3GPP and ETSI. The modem may be used as an independent chip, or may be combined with another chip or circuit to form a system-level chip or an integrated circuit. These chips or integrated circuits may be applied to all network side devices that implement a wireless communication function. For example, in an LTE network, the network side device is referred to as an evolved NodeB (evolved NodeB, eNB or eNodeB). In a 3rd generation (the 3rd Generation, 3G) network, the network side device is referred to as a NodeB (Node B). In a 5G network, the network side device is referred to as a 5G base station (NR NodeB, gNB). It needs to be noted that, in different implementations, the network device processor 401 may be used as an independent chip and is coupled to an off-chip memory, that is, the chip does not include a memory. Alternatively, the network device processor 401 is coupled to an on-chip memory and is integrated into a chip, that is, the chip includes a memory.

It may be understood that the network device 400 may be the network device 101 in the wireless communications system 100 shown in FIG. 2, and may be implemented as a base transceiver station, a wireless transceiver, a basic service set (BSS), an extended service set (ESS), a NodeB, an eNodeB, or the like. The network device 400 may be implemented by several different types of base stations, for example, a macro base station and a micro base station. The base station 400 may use different wireless technologies, for example, a cell radio access technology or a WLAN radio access technology.

It needs to be noted that the network device 400 shown in FIG. 5 is merely an implementation of this application. During actual application, the network device 400 may alternatively include more or fewer components. This is not limited herein.

Based on each embodiment corresponding to the wireless communications system 100, the terminal 300, and the network device 400, this application provides a channel sensing method, and provides a technical solution of performing channel sensing in a communications system (the following uses the NR-U system as an example) that operates in the unlicensed frequency band.

A main inventive idea of one aspect of this application may include sending, by a sending device after obtaining a channel through contention, a first channel occupancy signal to another peripheral device, where the first channel occupancy signal indicates, to the another device, transmission duration that the sending device needs to occupy on the channel obtained through contention, so that a collision between the sending device and the another device is avoided, thereby improving communication efficiency.

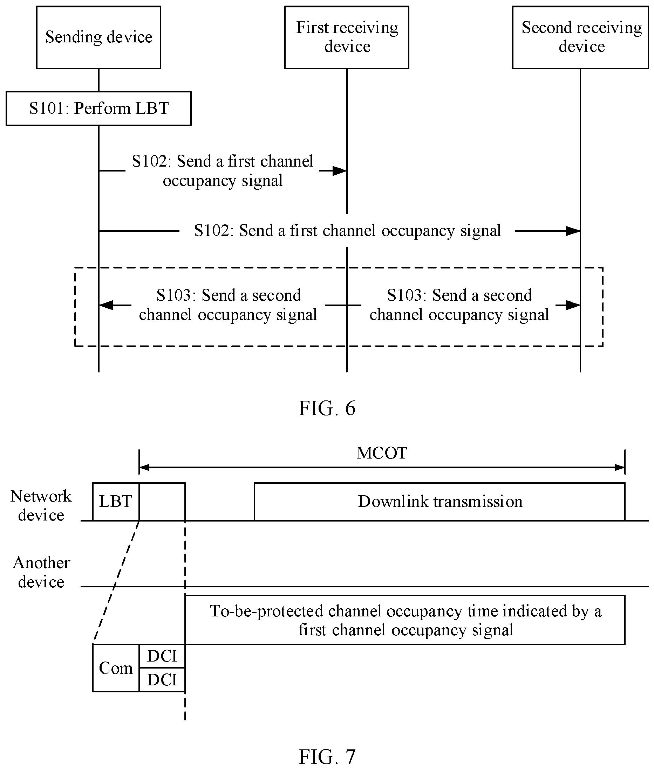

The following describes an overall procedure of the solutions in this application with reference to FIG. 6. It needs to be noted that, in the procedure shown in FIG. 6, a sending device may be a network device or a terminal. Specifically, if a device that initiates an LBT procedure is a network device, the sending device is the network device; or if a device that initiates an LBT procedure is a terminal, the sending device is the terminal. A channel sensing method includes the following steps.

S101: The sending device performs LBT, and performs S102 if the LBT succeeds.

Specifically, the sending device may perform the LBT based on the LBT mechanisms shown in FIG. 3A and FIG. 3B. Not limited to FIG. 3A and FIG. 3B, when applied to different communications systems, the LBT sensing mechanism used by the sending device may also change. However, it may be understood that, because basic principles of channel sensing are similar, even if another LBT sensing mechanism is used, implementation of this application is not affected.

S102: The sending device sends a first channel occupancy signal after the LBT succeeds, where the first channel occupancy signal is used to indicate, to another device, a to-be-protected channel occupancy time on a channel obtained by the sending device through contention.

Specifically, after the LBT succeeds, the sending device obtains channel use permission, and obtains a corresponding maximum channel occupancy time. In other words, the sending device may perform transmission within the obtained maximum channel occupancy time without being interfered with by the another device. In different embodiments, the channel occupancy time obtained by the sending device may be an MCOT, or may be a transmission opportunity (transmission opportunity, TXOP). In the following description, the "MCOT" is used as an example of the maximum channel occupancy time, and a device that obtains the MCOT may be referred to as an "owner of the MCOT". It needs to be noted that the to-be-protected channel occupancy time indicated by the first channel occupancy signal may be less than or equal to the MCOT. A device other than the sending device or a receiving device indicated by the sending device cannot perform transmission within the to-be-protected channel occupancy time, to avoid a collision.

Usually, when the sending device is the network device, downlink transmission is performed within a corresponding MCOT; or when the sending device is the terminal, uplink transmission is performed within a corresponding MCOT. Optionally, the sending device may share the obtained channel use permission within the MCOT with the another device. For example, when the sending device is the network device, the network device may share the channel use permission with the terminal for use, that is, the terminal is allowed to perform transmission within the MCOT. In other words, in some embodiments, there may be switching between uplink transmission and downlink transmission within an MCOT.

The following describes the first channel occupancy signal in more detail. In different embodiments, the first channel occupancy signal may also be referred to as a request-to-send (request to send, RTS) signal or a first channel reservation (reservation) signal.

The first channel occupancy signal includes one or both of first information and second information. The first information is used to indicate channel reservation information (reservation information). The first information may be carried on a common control channel, for example, a common-physical downlink control channel (common-physical downlink control channel, C-PDCCH). Alternatively, the first information is carried on a data channel (PDSCH) scheduled by a common control channel. Alternatively, a part of the first information is carried on a common control channel, and the other part of the first information is carried on a data channel scheduled by the common control channel. The receiving device may detect the first information in the first channel occupancy signal in common search space. Alternatively, the receiving device may receive the C-PDCCH in common search space, and receive the PDSCH scheduled by the C-PDCCH, to obtain the first information in the first channel occupancy signal. The channel reservation information may be obtained after the first information is detected. The receiving device may be a device other than the sending device. The channel reservation information is used to indicate the to-be-protected channel occupancy time for subsequent transmission performed by the sending device. After obtaining the channel reservation time, the another device does not perform transmission within the to-be-protected channel occupancy time, to avoid a collision. For example, after obtaining the channel reservation time, the another device updates NAV information of the another device, starts a timer, and does not perform transmission within the to-be-protected time. Specifically, the another device may set an NAV value, and correspondingly starts the timer. For example, the channel occupancy time may be in a unit of microseconds (µs), or may be in a unit of an orthogonal frequency division multiplexing (orthogonal frequency division multiplexing, OFDM) symbol, or may be in a unit of a slot (slot), or may be in a unit of a mini-slot (mini-slot). A subcarrier spacing corresponding to the OFDM symbol or the slot may be a subcarrier spacing pre-specified in a standard, or may be the same as a subcarrier spacing of the first channel occupancy signal.

Optionally, when the sending device is the network device, the channel reservation information may include information about a cell identity (cell ID) of the network device, so that the receiving device determines a source of the channel reservation information.

Optionally, when the sending device is the network device, a scrambling (scrambling) sequence and a demodulation reference signal (demodulation reference signal, DMRS) sequence that correspond to the common control channel carrying the first information and/or the data channel that carries the first information and that is scheduled by the common control channel may be decoupled from the cell ID. In this way, all devices in a cell other than the sending device, including the network device and a terminal device, can receive the first information in the first channel occupancy signal.

Optionally, when the sending device is the network device, the second information is used to indicate a receiving device (for example, a terminal) that needs to respond to the first channel occupancy signal. The second information includes information about N scheduled receiving devices (where N is an integer greater than or equal to 1). For example, the second information may be carried on a common control channel, for example, a common-physical downlink control channel (common-physical downlink control channel, C-PDCCH) or a group common-physical downlink control channel (group common-physical downlink control channel, GC-PDCCH). Alternatively, the second information is carried on a data channel (PDSCH) scheduled by a common control channel. Alternatively, a part of the second information is carried on a common control channel, and the other part of the second information is carried on a data channel scheduled by the common control channel. The receiving device may detect, in the common search space, whether the second information includes the information about the receiving device. Alternatively, the receiving device may receive the C-PDCCH/GC-PDCCH in the common search space, and receive the PDSCH scheduled by the C-PDCCH/GC-PDCCH, to detect whether the second information includes the information about the receiving device.

In another implementation, the information about the N scheduled receiving devices in the second information may alternatively be carried on N user-specific downlink control channels. Alternatively, the information about the N scheduled receiving devices is carried on N data channels (PDSCHs) scheduled by N user-specific downlink control channels. Alternatively, a part of the information about the N scheduled receiving devices is carried on N user-specific downlink control channels, and the other part of the information about the N scheduled receiving devices is carried on N data channels scheduled by the N user-specific downlink control channels. The receiving device may detect, in user-specific search space and/or the common search space, whether the second information includes the information about the receiving device. Alternatively, the receiving device may detect the user-specific downlink control channels in user-specific search space and/or the common search space, and receive the PDSCHs scheduled by the user-specific downlink control channels, to detect whether the second information includes the information about the receiving device.

Optionally, the second information includes identification information of the terminal that needs to respond to the first channel occupancy signal. The identification information may be indicated in the second information in an explicit manner, or may be indicated in an implicit manner. For example, the second information is scrambled by using the identification information, where the identification information may be a terminal ID. In this way, when the indicated receiving device determines, by receiving the second information, that the second information includes identification information consistent with the identification information of the receiving device, the receiving device responds according to the indication. A specific response manner is described below.

Optionally, the second information includes indication information of a resource location of a user-specific uplink channel of the terminal that needs to respond to the first channel occupancy signal.

The receiving device responds according to an indication of the first channel occupancy signal. A specific response manner is described below.

Optionally, when the first channel occupancy signal does not include the second information, all terminal devices in a cell in which the network device is located need to respond. A specific response manner is also described below.

The following describes a response process of the receiving device by using an example in which the first channel occupancy signal includes the second information. When the sending device sends the first channel occupancy signal to the receiving device, the method shown in FIG. 6 further includes: S103: A first receiving device receives the first channel occupancy signal, and sends a second channel occupancy signal based on the first information and/or the second information in the first channel occupancy signal. The second channel occupancy signal is used to indicate, to a second receiving device that receives the second channel occupancy signal, channel reservation information that is on the channel and that is sent by the sending device corresponding to the first receiving device, and/or is used to respond to the sending device corresponding to the first receiving device. It may be understood that, if the method is applied to an unlicensed frequency band, the LBT needs to succeed before the receiving device receives the first channel occupancy signal; or if the method is applied to a licensed frequency band, the LBT does not need to be performed before the receiving device receives the first channel occupancy signal.

The following describes the second channel occupancy signal in more detail. In different embodiments, the second channel occupancy signal may also be referred to as a clear-to-send (clear to send, CTS) signal, or may be referred to as a second channel reservation signal.

The second channel occupancy signal includes one or both of third information and fourth information.

The third information is used to indicate the channel reservation information (reservation information). The third information may be carried on a common uplink channel. Optionally, the common uplink channel may be an uplink control channel or an uplink data channel. The common uplink channel is carried on a common resource. The common resource may be a set of common RBs or REs that satisfy a specific structure, for example, may be a group of RBs or REs distributed at equal intervals in frequency domain, or may be interlaced (interlace) resources. Optionally, the common resource may be predefined in a standard. Alternatively, the common resource may be indicated in the first channel occupancy signal.

The second receiving device may detect the third information on the common uplink channel. After detecting the third information, the second receiving device may obtain the channel reservation information that is on the channel and that is sent by the sending device corresponding to the first receiving device. Optionally, the second receiving device may be a device other than the first receiving device. Alternatively, the second receiving device is a device in a cell different from a cell in which the first receiving device is located.

The channel reservation information is used to indicate the to-be-protected channel occupancy time for transmission after transmission of the second channel occupancy signal. After obtaining the third information, the second receiving device updates duration for which no transmission is performed, and does not perform transmission within the to-be-protected channel occupancy time, to avoid a collision. Optionally, after obtaining the third information, the another device updates NAV information of the another device, starts a timer, and does not perform transmission within the to-be-protected time. Optionally, the channel occupancy time includes an indication of remaining duration of the MCOT. Alternatively, the channel occupancy time includes a plurality of groups of time indications within the MCOT, the plurality of groups of time indications are used to indicate the remaining duration of the MCOT by segment, and each group of time corresponds to uplink transmission duration and downlink transmission duration of the MCOT. For example, the channel occupancy time may be in a unit of microseconds (µs), or may be in a unit of an OFDM symbol, or may be in a unit of a slot, or may be in a unit of a mini-slot. A subcarrier spacing corresponding to the OFDM symbol or the slot may be a subcarrier spacing pre-specified in a standard, or may be the same as a subcarrier spacing of the first channel occupancy signal.

Optionally, the channel reservation information needs to carry information about a cell identity (cell ID).

Optionally, a scrambling (scrambling) sequence and/or a demodulation reference signal DMRS (demodulation reference signal) sequence that correspond/corresponds to the common uplink channel are/is unrelated to the cell ID and a UE ID. The fourth information includes response information sent to the network device, and the fourth information is carried on the user-specific uplink channel. Optionally, the user-specific uplink channel may be the uplink control channel or the uplink data channel.

Optionally, a resource on which the user-specific uplink channel is located is indicated in the first channel occupancy signal in an implicit manner. For example, resources on which the user-specific uplink channel is located are arranged in fixed order. Optionally, the fixed order may be order of the identification information of the terminals included in the second information in the first channel occupancy signal. Optionally, a resource on which the user-specific uplink channel is located may alternatively be indicated in the first channel occupancy signal in an explicit manner. For example, the second information in the first channel occupancy signal indicates a resource location of the user-specific uplink channel.

Optionally, the fourth information may include channel state information, and the channel state information is used by the sending device corresponding to the first receiving device to optimize scheduling, thereby increasing a system throughput.

Optionally, the channel occupancy time mentioned in this application may be or may include the indication of the remaining duration of the MCOT. Alternatively, the channel occupancy time may be or may include an indication of a plurality of segments of duration, and each segment of duration may be a segment of continuous downlink transmission duration or a segment of continuous uplink transmission duration in the MCOT, or may be duration of a transmission interval that satisfies a preset condition (for example, a transmission interval greater than 25 µs or 100 µs). Optionally, each segment of duration may include a plurality of segments of transmission. The plurality of segments of transmission may be uplink transmission and/or downlink transmission, and an interval between the plurality of segments of transmission satisfies a preset condition (for example, less than 25 µs or 100 µs).

The first channel occupancy signal and the second channel occupancy signal that are used for exchange may be both sent in a licensed frequency band, or may be both sent in an unlicensed frequency band. Alternatively, one is sent in a licensed frequency band, and the other one is sent in an unlicensed frequency band.. This is not limited in this application. For example, the first channel occupancy signal is sent in the licensed frequency band, and the second channel occupancy signal is sent in the unlicensed frequency band; or the first channel occupancy signal is sent in the unlicensed frequency band, and the second channel occupancy signal is sent in the licensed frequency band; or both the first channel occupancy signal and the second channel occupancy signal are sent in the unlicensed frequency band; or both the first channel occupancy signal and the second channel occupancy signal are sent in the licensed frequency band.

Optionally, a long CP transmission mode is used for the exchanged first channel occupancy signal and/or the exchanged second channel occupancy signal by default, and a normal CP transmission mode is used for other transmission within the MCOT.

The following describes in detail the solutions provided in this application by using a plurality of embodiments.

### (1) Embodiment 1 and related embodiments

The following describes the solutions by using an example in which the sending device is the network device and the receiving device is the terminal. It may be understood that a similar solution is also applicable to a case in which the sending device is the terminal and the receiving device is the network device.

Referring to FIG. 7, after LBT succeeds, the network device obtains channel use permission, and obtains a corresponding MCOT. In this case, in step S102, the network device sends a first channel occupancy signal, where the first channel occupancy signal is carried in common control channel for sending. In other words, the network device sends the first channel occupancy signal by using the common control channel. First information in the first channel occupancy signal is used to indicate a to-be-protected channel occupancy time for subsequent transmission performed by the network device. After receiving the first channel occupancy signal, another device may learn, based on the first information in the first channel occupancy signal, of a time that the network device needs to occupy, thereby avoiding a collision. For example, the another device may be a terminal in a cell in which the network device is located, or the another device may be another network device in a cell neighboring to a cell in which the network device is located or a terminal in a cell in which the another network device is located.

Optionally, the first channel occupancy signal may further include information about an identity ID of a cell in which the network device is located, to indicate a source of the first channel occupancy signal to the receiving device. For example, the information about the identity ID may alternatively be information about a physical cell identifier (physical cell identifier, PCI) similar to that in an LTE system.

Optionally, the first channel occupancy signal may further include second information, and the second information is used to indicate a terminal that needs to respond to the first channel occupancy signal sent by the network device. In another embodiment, the second information may be decoupled from the first channel occupancy signal, that is, the network device separately sends the second information.

A terminal that receives the second information needs to send response information, for example, a second channel occupancy signal. The response information is used to indicate the to-be-protected channel occupancy time, that is, reserve the channel use permission for subsequent transmission. The another device that receives the first channel occupancy signal from the network device needs to determine to-be-protected transmission duration based on the first information in the first channel occupancy signal, and cannot occupy the channel within the time period. For example, the another device updates a network allocation vector (network allocation vector, NAV) of the another device, or uses another manner. Another device that receives the response information from the terminal needs to determine the to-be-protected channel occupancy time based on occupancy time information carried in the response information, and cannot occupy the channel within the time period. For example, the another device updates an NAV of the another device. The another device includes but is not limited to one or more of the following devices: another device that is in a cell in which the terminal sending the response information is located and that does not need to send the response information, or a network device or a terminal in another cell.

When transmission within the MCOT is discontinuous transmission, to be specific, there are one or more intervals between two adjacent transmissions, the first channel occupancy signal and/or the second channel occupancy signal need/needs to further include duration information of the one or more intervals. Optionally, the channel use permission may be released during the one or more intervals. After receiving corresponding information, the another device may access the channel during the one or more intervals. For example, information about the one or more intervals may be represented by using starting points and ending points of the one or more intervals. In different embodiments, a specific condition may be set for one or more transmission intervals within the MCOT. The channel use permission is released during the one or more intervals only when the one or more intervals satisfy the specific condition, for example, when the one or more intervals are greater than or less than a threshold; when the one or more intervals do not satisfy the specific condition, the channel use permission is not released during the one or more intervals.

Optionally, if the sending device releases the channel use permission during the one or more intervals within the MCOT, duration whose length is equal to a total length of the one or more intervals may be compensated for, that is, duration of the one or more corresponding transmission intervals is prolonged from an ending point of the MCOT.

According to the foregoing method, at a starting moment of the MCOT, information is exchanged between a transmit end and a receive end, to ensure that the channel is not occupied by the another device within a corresponding MCOT, thereby avoiding a collision caused by the another device. In addition, the channel use permission is released during the one or more transmission intervals within the MCOT by exchanging information, thereby improving frequency utilization, and further improving a system throughput. In addition, a new common control channel is designed, and the common control channel is used for exchange. Therefore, the channel is protected in advance, thereby avoiding a collision; and the channel use permission is further released in time during the one or more transmission intervals, thereby improving spectrum utilization.

### (2) Embodiment 2 and related embodiments

The following uses an example in which the sending device is the network device and the receiving device is the terminal, to further describe a case in which there are one or more intervals within one MCOT, especially information exchange during the one or more intervals within the MCOT. In this embodiment, related devices in a same cell have been synchronized, and related devices between cells have also been synchronized. It may be understood that a similar solution is also applicable to a case in which the sending device is the terminal and the receiving device is the network device.

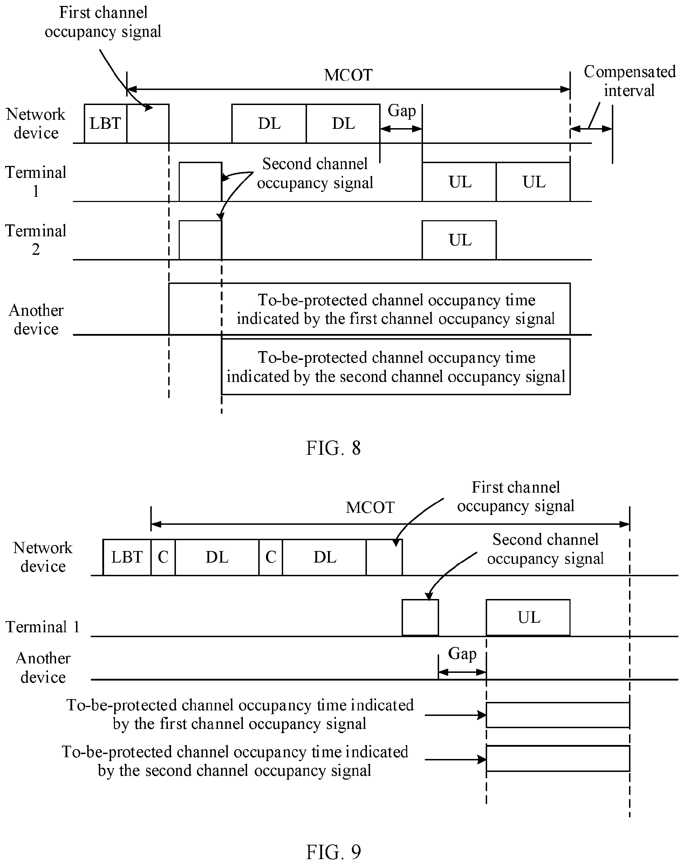

Referring to FIG. 8, the network device obtains a corresponding MCOT after LBT succeeds. After downlink transmission is completed, there is still a remaining MCOT. If uplink data arrives, the network device may choose to share the remaining MCOT with a terminal that needs to transmit the uplink data. In another embodiment, when the sending device is the terminal, the terminal obtains a corresponding MCOT after LBT succeeds. After uplink transmission is completed, there is still a remaining MCOT. If the network device needs to send downlink data, the terminal may choose to share the remaining MCOT with a terminal that needs to transmit the downlink data. Alternatively, if another terminal needs to send uplink data, the terminal may choose to share the remaining MCOT with a terminal that needs to transmit the uplink data.

It may be understood that there may be one or more intervals between the downlink transmission and the uplink transmission due to a scheduling delay or the like. If the channel is not protected, the channel may be occupied by another device during the one or more intervals, and consequently, the remaining MCOT cannot be used. Therefore, to avoid a channel loss or a collision during the one or more intervals, channel use permission may be reserved for the remaining MCOT through information exchange after the network device completes the downlink transmission. It needs to be noted that the one or more intervals may be caused by another reason that is not limited to the foregoing case, and the one or more intervals may exist between uplink transmission and uplink transmission, or may exist between downlink transmission and downlink transmission. Optionally, channel use permission may further be released during the one or more intervals by using the exchanged information, thereby further improving channel utilization.

Specifically, as shown in FIG. 8, the network device sends a first channel occupancy signal when the downlink transmission is completed. First information included in the first channel occupancy signal is used to determine a to-be-protected channel occupancy time, so that the channel use permission is reserved for subsequent uplink transmission performed by a terminal 1 and a terminal 2. Correspondingly, the another device determines the to-be-protected channel occupancy time based on an occupancy time indicated by the first information in first channel occupancy signal, and cannot occupy the channel within the time period. For example, the another device updates an NAV, starts or updates a timer, or uses another manner. In this way, the another device does not occupy the channel within the occupancy time, thereby avoiding a collision.

When the first channel occupancy signal includes second information corresponding to the terminal 1 and the terminal 2, the terminal 1 and the terminal 2 are indicated to send a second channel occupancy signal. Third information in the second channel occupancy signal is used to indicate a subsequent to-be-protected channel occupancy time, that is, reserve the channel use permission. Another device that is not indicated by the second information and that receives the first channel occupancy signal needs to update the to-be-protected channel occupancy time based on the first information carried in the first channel occupancy signal, and cannot occupy the channel within the time period. For example, the another device updates an NAV, or starts or updates a timer.

Another device that receives the second channel occupancy signal also needs to determine to-be-protected transmission duration based on the third information carried in the second channel occupancy signal, and cannot occupy the channel within the time period. For example, the another device updates NAV information of the another device, or uses another manner, and cannot occupy the channel within the time period.

Optionally, if there are still one or more intervals between a moment at which sending of the second channel occupancy signal is completed and a starting moment of the uplink transmission, the channel permission can be released.

For the first channel occupancy signal and the second channel occupancy signal, refer to the foregoing detailed descriptions of the first channel occupancy signal and the second channel occupancy signal. Details are not described herein again.

When there are one or more intervals within the MCOT, on a basis of the method in Embodiment 1, information is further exchanged between a transmit end and a receive end during the one or more intervals, thereby avoiding a channel loss and avoiding a collision caused by another device. Optionally, one or more transmission intervals within the MCOT are released by exchanging information, thereby improving frequency utilization, and further improving a system throughput. A new common control channel is designed, and common control channel is used for exchange. Therefore, the channel is protected in advance, thereby avoiding a collision; and the channel is further released in time during the one or more transmission intervals, thereby improving spectrum utilization.

### (3) Embodiment 3 and related embodiments

The following continues to use an example in which the sending device is the network device and the receiving device is the terminal to describe information exchange when an MCOT owner terminates transmission in advance within an MCOT. In this embodiment, related devices in a same cell have been synchronized, and related devices between cells have also been synchronized. It may be understood that a similar solution is also applicable to a case in which the sending device is the terminal and the receiving device is the network device.

The network device obtains a corresponding MCOT after LBT succeeds. Optionally, information is exchanged at a starting moment of the MCOT and/or an interval within the MCOT, to indicate a subsequent to-be-protected channel occupancy time, so that channel use permission is reserved. If the network device needs to terminate transmission within the remaining time, the network device and/or the terminal may exchange a termination signal after the transmission is terminated. The network device sends a channel release (release) signal, and the channel release signal is referred to as a release signal for short below. The terminal sends a channel release acknowledgment signal, and the channel release acknowledgment signal is referred to as a release acknowledgement signal for short below. In this way, the channel use permission is released. The transmission may be terminated in advance when there is still a remaining MCOT after the network device and/or the terminal complete/completes the transmission, or may be terminated in advance due to another reason.

Another device that receives the release signal may update to-be-protected transmission duration that is previously determined, and cannot occupy the channel within the update time period. For example, the another device updates NAV information, updates a timer, or uses another manner. After the channel is released, the another device is allowed to access the channel. In other words, the another device that receives the release signal is allowed to access the channel after the channel is released. Optionally, after receiving the release signal, the another device updates a corresponding NAV or uses another manner. Optionally, the another device further starts or updates the timer, and cannot perform transmission within the time period.

Specifically, the network device sends the release signal after the transmission is terminated, to determine the to-be-protected channel occupancy time for subsequent sending of the release acknowledgement signal by the terminal, so that the channel use permission is reserved. The release signal needs to include channel reservation information, to indicate the subsequent to-be-protected channel occupancy time. The channel reservation information may be carried on a common control channel. For carrying of the channel reservation information, refer to the design of the first information in the first channel occupancy signal. Details are not described herein again. Optionally, the release signal needs to include information about a cell identity ID, to distinguish a cell to which the signal belongs. In addition, in addition to the common channel reservation information, the release signal may further include fifth information that is similar to the second information in the first channel occupancy signal and that is used to indicate a terminal that needs to respond.

The another device that receives the release signal sent by the network device updates the NAV based on the indicated time information, to determine the updated to-be-protected transmission duration, and cannot occupy the channel within the update time period. For example, the another device updates the NAV, starts or updates the timer, or uses another manner. After the channel is released, the another device is allowed to access the channel.

A terminal that receives the fifth information sends the release acknowledgement signal, to release the channel use permission.

After receiving the release acknowledgment signal sent by the terminal, another device that can receive the release acknowledgment signal sets the NAV information to zero, and then is allowed to occupy the channel.

Optionally, the channel reservation information carried in the release signal is used to indicate the subsequent to-be-protected channel occupancy time. The channel occupancy time may be in a unit of µs. Optionally, the channel occupancy time may alternatively be in a unit of an OFDM symbol, or may be in a unit of a slot. A subcarrier spacing corresponding to the OFDM symbol or the slot may be a subcarrier spacing pre-specified in a standard, or may be the same as a subcarrier spacing of the release signal.

Optionally, exchange of the channel release signal may alternatively be initiated by the UE, that is, the UE first sends the release signal, and a base station sends the release acknowledgement signal. A specific procedure is consistent with the foregoing procedure. It may be understood that the release signal and the release acknowledgement signal herein are merely intended to facilitate description of the solutions, and do not constitute a limitation.

The following describes the release signal in more detail.

For example, the release signal includes one or both of the fifth information and sixth information, and may also be referred to as a "third channel occupancy signal". The fifth information may be designed with reference to a configuration of the first information in the first channel occupancy signal, and is used to reserve the to-be-protected channel occupancy time. The sixth information may be designed with reference to a configuration of the second information in the first channel occupancy signal, and is used to indicate the terminal that needs to respond. In some implementations, the to-be-protected channel occupancy time indicated by the fifth information may be zero. In some implementations, the release signal may further include a channel release flag (flag). The flag is used to indicate whether to release the channel use permission, and is a difference between the release signal and the first channel occupancy signal. It may be understood that, if there is no channel release flag, the release signal may alternatively be understood as a specially configured first channel occupancy signal.

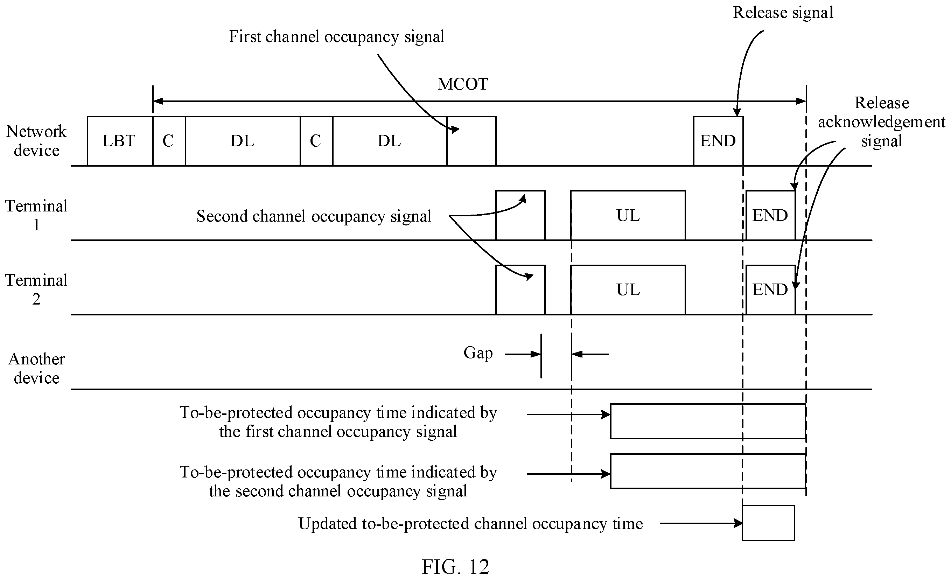

In another embodiment, referring to FIG. 12, a release signal is described from another perspective. When the network device indicates that a specific terminal needs to respond, the release signal needs to further carry the channel reservation information, and the channel reservation information is used to indicate the subsequent to-be-protected channel occupancy time, to reserve, for the terminal that needs to respond, duration for sending the release acknowledgement signal. The channel reservation information may be carried on the common control channel, for example, a C-PDCCH. The receiving device may retrieve the release signal in common search space corresponding to the C-PDCCH, and may obtain the channel reservation information after detecting the release signal.

Optionally, the channel reservation information may include information about a cell identity (cell ID) of the network device, so that the receiving device determines a source of the channel reservation information.

Optionally, a scrambling (scrambling) sequence and a DMRS sequence that correspond to the common control channel C-PDCCH may be decoupled from the cell ID. In this way, a device in a cell in which another network device other than the sending device is located may also receive the release signal.

The release signal indicating that a response is required may further carry specific indication information. The specific indication information may be carried on the C-PDCCH or a group common-physical downlink control channel (group common-physical downlink control channel, GC-PDCCH), and a physical downlink shared channel (physical downlink shared channel, PDSCH) corresponding to the specific indication information includes identification information of all receiving devices that need to respond. For example, for the terminal, the identification information may be a terminal ID. In this way, when the indicated receiving device determines, by decoding the C-PDCCH/GC-PDCCH and the PDSCH, that the PDSCH includes identification information consistent with the identification information of the PDSCH, the receiving device responds according to the indication, for example, sends the release acknowledgement signal. The following describes the release acknowledgment signal in more detail. In another implementation, the specific indication information may alternatively be carried by using user-specific downlink control information (downlink control information, DCI). After obtaining the DCI by decoding the PDCCH, the terminal may respond according to an indication in the DCI, that is, send the release acknowledgement signal.

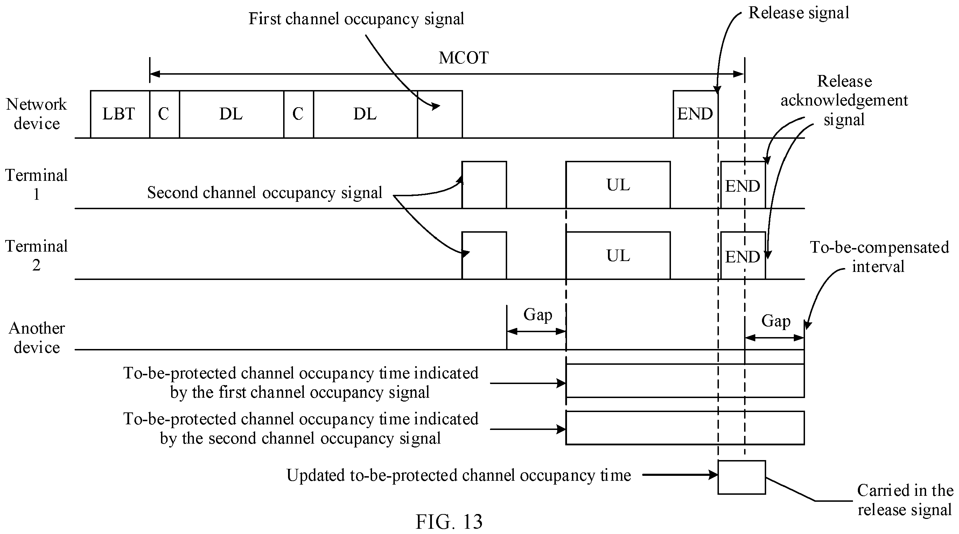

FIG. 13 shows an embodiment in which a total length of one or more intervals within an MCOT needs to be compensated for when the one or more intervals satisfy a threshold.

The following describes the release acknowledgment signal in more detail.

For example, the release acknowledgement signal includes one or both of seventh information and eighth information, and may also be referred to as a "fourth channel occupancy signal". The seventh information may be designed with reference to a configuration of the third information in the second channel occupancy signal, and is used to reserve the to-be-protected channel occupancy time. The eighth information may be designed with reference to a configuration of the fourth information in the second channel occupancy signal. In some implementations, the to-be-protected channel occupancy time indicated by the seventh information may be zero. In some implementations, the release acknowledgement signal may further include a channel release flag (flag). The flag is used to indicate whether to release the channel use permission, and is a difference between the release acknowledgement signal and the second channel occupancy signal. It may be understood that, if there is no channel release flag, the release acknowledgement signal may alternatively be understood as a specially configured second channel occupancy signal.

In addition, in another embodiment, optionally, the release acknowledgement signal further includes acknowledgment information (ACK) sent to the network device. The ACK is carried on a user-specific PUCCH. Optionally, a resource on which the PUCCH is located is indicated in an implicit manner. For example, PUCCH resources corresponding to all UEs that are indicated to perform end acknowledgment are arranged in fixed order. Optionally, a resource on which the PUCCH is located may alternatively be indicated in an explicit manner. For example, the user-specific downlink control information included in the release signal indicates a resource location of a corresponding PUCCH.

The release signal and the release acknowledgement signal that are used for exchange may be both sent in a licensed frequency band, or may be both sent in an unlicensed frequency band. Alternatively, one is sent in a licensed frequency band, and the other one is sent in an unlicensed frequency band. This is not limited in this application. For example, the release signal is sent in the licensed frequency band, and the release acknowledgement signal is sent in the unlicensed frequency band; or the release signal is sent in the unlicensed frequency band, and the release acknowledgement signal is sent in the licensed frequency band; or both the release signal and the release acknowledgement signal are sent in the licensed frequency band.

In this embodiment, when the transmission can be ended in advance, the channel use permission is released in advance by exchanging the channel release information, thereby improving frequency utilization, and further improving a system throughput. In addition, a new common control channel, for example, the PUCCH and a common control channel in a broader sense, is designed, and common control channel is used to exchange the channel release information, thereby improving spectrum utilization.

### (4) Embodiment 4 and related embodiments

The following continues to use an example in which the sending device is the network device and the receiving device is the terminal, that is, a case in which an MCOT owner is the network device. It may be understood that a similar solution is also applicable to a case in which the sending device is the terminal and the receiving device is the network device, that is, a case in which an MCOT owner is the terminal.

After LBT succeeds, the network device obtains channel use permission, and obtains a corresponding MCOT, so that the network device can reserve the channel use permission by sending reservation sequence information. Specifically, the reservation sequence information may be grouped, and reservation sequences in different groups may be used to indicate remaining to-be-protected transmission duration with different lengths. Optionally, the reservation sequence information may alternatively be grouped, and whether the information belongs to the sending device or the receiving device may be distinguished by using information about a group to which a reservation sequence belongs. For example, the reservation sequence information may be designed based on a ZC sequence (Zadoff-Chu) such as a preamble (preamble) sequence (sequence) or a sounding reference signal (sounding reference signal, SRS) sequence in random access in an existing LTE/NR system. This is not specifically limited in this application.

The terminal that needs to respond also needs to send a corresponding acknowledgment sequence to reserve the channel use permission, that is, to indicate remaining to-be-protected transmission duration of the terminal. Specifically, acknowledgment sequences may be grouped, and acknowledgment sequences in different groups may be used to indicate remaining to-be-protected transmission duration with different lengths. Optionally, the acknowledgment sequences may alternatively be grouped, and whether the information belongs to the sending device or the receiving device may be distinguished by using information about a group to which an acknowledgment sequence belongs. For example, the acknowledgment sequence may be designed based on a ZC sequence (Zadoff-Chu) such as a preamble sequence or a sounding reference signal SRS sequence in random access in an existing LTE/NR system. This is not specifically limited in this application. Another device that can receive the reservation sequence and/or the acknowledgment sequence needs to update a to-be-protected channel occupancy time based on a subsequent remaining to-be-protected transmission duration corresponding to the reservation sequence and/or the acknowledgment sequence, and is not allowed to occupy the channel within the corresponding time. For example, the another device updates NAV information, updates or starts a timer, or uses another manner. For example, a sequence set may be divided into several groups (group), for example, a group A and a group B. A sequence in the group A is used as a reservation sequence, and a sequence in the group B is used as an acknowledgment sequence. Further, the group A may further be grouped, and sequences in different groups may indicate remaining to-be-protected transmission duration with different lengths. Similarly, the group B may further be grouped, and sequences in different groups may indicate remaining to-be-protected transmission duration with different lengths. Alternatively, in another embodiment, different sequence sets may separately be used as a set of reservation sequences and a set of acknowledgment sequences.

For example, if there are one or more transmission intervals within one MCOT, the transmit end and the receive end may alternatively indicate the one or more transmission intervals by exchanging sequence information. For example, the transmit end and the receive end perform exchange by using the sequences in different groups or by using a sequence with an identifier, to indicate the one or more transmission intervals. In this way, the one or more transmission intervals may be released, or channel reservation information may be exchanged based on the one or more transmission intervals. Another device that can receive the indication of the one or more transmission intervals may learn of information about the one or more transmission intervals according to the indication. When the one or more transmission intervals are released, the another device may access a channel during the one or more transmission intervals. For example, a group C is defined, and the one or more transmission intervals may be indicated by using a sequence in the group C. Further, the group C may further be grouped, and sequences in different groups may be used to indicate the one or more transmission intervals with different lengths. It may be understood that the information about the one or more transmission intervals may alternatively be indicated by using different sequence sets.

For example, if transmission needs to be terminated in advance within the MCOT, the transmit end and the receive end may alternatively release the channel use permission in advance by exchanging the sequence information. Another device that can receive a sequence used to indicate early release may learn, based on the sequence information, that the channel is released in advance, so that the another device can access the channel. For example, a sequence in a group D may be used to indicate that a channel is released in advance within the MCOT. It may be understood that the channel may alternatively be released by using a new sequence set.

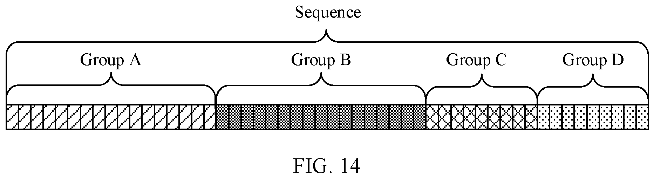

The foregoing sequence groups may be indicated by using radio resource control (radio resource control, RRC) signaling. For example, a total quantity of sequences and a quantity of sequences included in each group may be separately indicated in RRC signaling, to indicate the groups. Specifically, numberofsequence may be defined in the RRC signaling to indicate a total quantity of all sequences, and sizeofsequencegroupA, sizeofsequencegroupB, sizeofsequencegroupC, and sizeofsequencegroupD each are used to indicate a quantity of sequences included in each group. The sequences of each group may be determined in order. For example, for all sequences, the first sizeofsequencegroupA sequences correspond to sequences in the group A; the next sizeofsequencegroupB sequences correspond to sequences in the group B; and so on. As shown in FIG. 14, numberofsequence=52, to be specific, a quantity of sequences is 52; sizeofsequencegroupA=17, to be specific, the sequences in the group A are the first 17 sequences; sizeofsequencegroupB=17, to be specific, the sequences in the group B are the 18^{th} sequence to the 34^{th} sequence; sizeofsequencegroupC=9, to be specific, sequences in the group C are the 35^{th} sequence to the 43^{rd} sequence; and sizeofsequencegroupD=9, to be specific, sequences in the group C are the 44^{th} sequence to the 52^{nd} sequence.

It may be understood that the foregoing grouping manner and meaning may be specified in a standard, or may be agreed on in advance without an indication, or may be indicated.

The channel use permission is reserved and released through exchange based on the ZC sequence. When no synchronization is implemented, a collision can be effectively avoided, and the channel can be released in advance, thereby improving spectrum utilization and a system capacity. A sequence similar to a preamble sequence is introduced, and the sequences are exchanged to reserve the channel use permission, release the one or more intervals, and release the channel in advance, so that a collision caused by a hidden node problem is finally avoided, and the channel use permission can be released in time, thereby improving the spectrum utilization.

In different implementations, channel exchange information that is designed in this application and that is used for channel reservation and/or transmission interval indication and/or channel release may be implemented based on directional transmission. For example, in the method described in Embodiment 1, when sending the first channel occupancy signal, the network device chooses to send the first channel occupancy signal on a transmit beam corresponding to the network device. The device that needs to respond also sends the second channel occupancy signal on a transmit beam corresponding to the device. In this case, another device that is located within coverage of the beam used by the network device to send the first channel occupancy signal cannot perform transmission within the to-be-protected channel occupancy time indicated by the first information in the first channel occupancy signal. Similarly, another device that is located within coverage of the beam used by the terminal to send the second channel occupancy signal cannot perform transmission within the to-be-protected channel occupancy time indicated by the second channel occupancy signal. It may be understood that being located within the coverage of the beam means that a signal transmitted on the beam can be received. Similarly, exchange information in Embodiment 2, Embodiment 3, and Embodiment 4 may be transmitted based on each transmit/receive beam of the transmit end and the receive end.

By using the exchange information based on the directional transmission, it can be effectively ensured that data transmission of the transmit end and the receive end is not interfered with by another device in a direction of the transmit/receive beam. In addition, only a channel in a direction of a beam of the transmit end and the receive end is reserved by using directional exchange information, and no other beam direction is occupied. This helps improve space utilization.

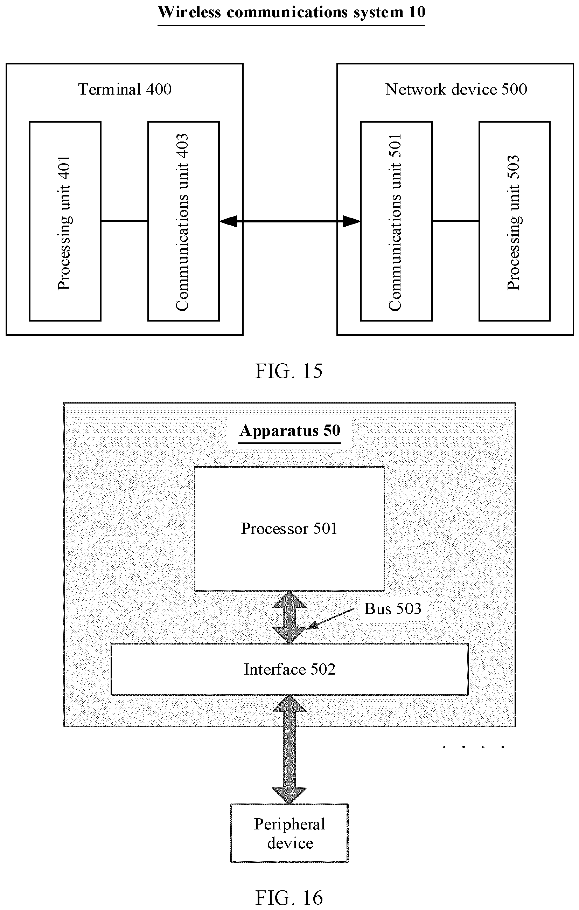

FIG. 15 shows a wireless communications system 10 according to an embodiment of this application, and a sending device 500 and a receiving device 400 in the wireless communications system 10. The sending device 500 may be the network device or the terminal in the foregoing method embodiments, and the receiving device 400 may be the network device or the terminal in the foregoing method embodiments.

As shown in FIG. 15, the sending device 500 may include a communications unit 501 and a processing unit 503.

The processing unit 503 is configured to control the communications unit 501 to send a first channel occupancy signal after LBT succeeds, where the first channel occupancy signal is used to indicate, to a first receiving device that receives the first channel occupancy signal, a to-be-protected channel occupancy time on a channel occupied by the sending device after the LBT succeeds.

The communications unit 501 may be configured to send the first channel occupancy signal to the receiving device (for example, a terminal and a network device and a terminal in another cell).

In addition, the processing unit 503 and the communications unit 501 may be further configured to perform an LBT procedure. For details about the LBT procedure, refer to related regulations in 3GPP R13. Details are not described herein.

As shown in FIG. 15, the receiving device 400 may include a processing unit 401 and a communications unit 403.

The communications unit 403 may be configured to receive a first channel occupancy signal from a network device, where the first channel occupancy signal is used to indicate, to the receiving device, a to-be-protected channel occupancy time on a channel occupied by the sending device after LBT succeeds.

The processing unit 401 may be configured to: receive the first channel occupancy signal, to obtain information about the occupancy time, and control the receiving device not to perform transmission within the to-be-protected channel occupancy time.

It may be understood that, for specific implementations of the functional units included in the network device 500 and the terminal 400, refer to the foregoing method embodiments. Details are not described herein again.

In addition, an embodiment of this application further provides a wireless communications system. The wireless communications system may be the wireless communications system 100 shown in FIG. 2, or the wireless communications system 10 shown in FIG. 15, and may include a network device and a terminal. The terminal may be the terminal in the foregoing embodiments, and the network device may be the network device in the foregoing embodiments. Specifically, the terminal may be the terminal 300 shown in FIG. 4, and the network device may be the network device 400 shown in FIG. 5. Alternatively, the terminal may be the terminal 400 shown in FIG. 15, and the network device may be the network device 500 shown in FIG. 15. For specific implementations of the network and the terminal, refer to the foregoing embodiments. Details are not described herein again.

Using the network device shown in FIG. 5 as an example, the network device processor 401 is configured to: control the transmitter 407 to perform sending in an unlicensed frequency band and/or a licensed frequency band, and control the receiver 409 to perform receiving in the unlicensed frequency band and/or the licensed frequency band. The transmitter 407 is configured to support the network device in performing a process of transmitting data and/or signaling. The receiver 409 is configured to support the network device in performing a process of receiving the data and/or the signaling. The transmitter 407 and the receiver 409 may also be coupled as a transceiver 410. The memory 405 is configured to store program code and data of the network device.

When the network device is a sending device, the processor 401 is configured to control the transceiver 410 to perform LBT; and the processor 401 is configured to control the transceiver to send a first channel occupancy signal after the LBT succeeds, where the first channel occupancy signal is used to indicate, to a first receiving device that receives the first channel occupancy signal, a to-be-protected channel occupancy time on a channel occupied by the sending device after the LBT succeeds.

When the network device is a receiving device, the processor 405 is configured to control the transceiver 410 to receive a first channel occupancy signal from a sending device, where the first channel occupancy signal is used to indicate, to the receiving device, a to-be-protected channel occupancy time on a channel occupied by the sending device after LBT succeeds. The processor 405 is further configured to decode the first channel occupancy signal, to obtain the to-be-protected channel occupancy time indicated by the first channel occupancy signal.

For specific implementations of components in the network device, refer to the foregoing method embodiments. Details are not described herein again.

Using the terminal shown in FIG. 4 as an example, the terminal processor 304 is configured to invoke an instruction stored in the memory 312 to control the transmitter 306 to perform sending in an unlicensed frequency band and/or a licensed frequency band and control the receiver 308 to perform receiving in an unlicensed frequency band and/or a licensed frequency band. The transmitter 306 is configured to support the terminal in performing a process of transmitting data and/or signaling. The receiver 308 is configured to support the terminal in performing a process of receiving the data and/or the signaling. The transmitter 306 and the receiver 308 may also be coupled as a transceiver 310. The memory 312 is configured to store program code and data of the terminal.

When the terminal is a sending device, the processor 304 is configured to control the transceiver 310 to perform LBT; and the processor 304 is configured to control the transceiver to send a first channel occupancy signal after the LBT succeeds, where the first channel occupancy signal is used to indicate, to a first receiving device that receives the first channel occupancy signal, a to-be-protected channel occupancy time on a channel occupied by the sending device after the LBT succeeds.

When the network device is a receiving device, the processor 304 is configured to control the transceiver 310 to receive a first channel occupancy signal from a sending device, where the first channel occupancy signal is used to indicate, to the receiving device, a to-be-protected channel occupancy time on a channel occupied by the sending device after LBT succeeds. The processor 304 is further configured to decode the first channel occupancy signal, to obtain the to-be-protected channel occupancy time indicated by the first channel occupancy signal.

For specific implementations of components in the terminal, refer to the foregoing method embodiments. Details are not described herein again.

FIG. 16 is a schematic structural diagram of an apparatus according to this application. As shown in FIG. 16, an apparatus 50 may include a processor 501, and one or more interfaces 502 coupled to the processor 501.

The processor 501 may be configured to read and execute a computer-readable instruction. In specific implementation, the processor 501 may mainly include a controller, an arithmetic unit, and a register. The controller is mainly responsible for decoding an instruction, and sends a control signal for an operation corresponding to the instruction. The arithmetic unit is mainly responsible for performing a fixed-point or floating-point arithmetic operation, a shift operation, a logic operation, and the like, or may perform an address operation and an address conversion. The register is mainly responsible for storing a quantity of register operations, intermediate operation results, and the like that are temporarily stored during instruction execution. In specific implementation, a hardware architecture of the processor 501 may be an application-specific integrated circuit (Application Specific Integrated Circuits, ASIC) architecture, an MIPS architecture, an ARM architecture, an NP architecture, or the like. The processor 501 may be a single-core or multi-core processor.

The interface 502 may be configured to input to-be-processed data to the processor 501, and may output a processing result of the processor 501. In specific implementation, the interface 502 may be a general-purpose input/output (General Purpose Input Output, GPIO) interface, and may be connected to a plurality of peripheral devices (such as a radio frequency module). The interface 502 may further include a plurality of independent interfaces, for example, an Ethernet interface and a mobile communications interface (for example, an X1 interface). The plurality of independent interfaces are separately responsible for communication between different peripheral devices and the processor 501.

In this application, the processor 501 may be configured to: invoke, from a memory, a program for implementing, on a network device side or a terminal side, the channel sensing method provided in one or more embodiments of this application, and execute an instruction included in the program. The interface 502 may be configured to output an execution result of the processor 501. In this application, the interface 502 may be specifically configured to output the processing result of the processor 501. For the channel sensing method provided in one or more embodiments of this application, refer to the foregoing embodiments. Details are not described herein again.

It needs to be noted that functions corresponding to the processor 501 and the interface 502 may be implemented by using a hardware design, or may be implemented by using a software design, or may be implemented by combining software and hardware. This is not limited herein.

Methods or algorithm steps described in combination with the content disclosed in the embodiments of this application may be implemented by hardware, or may be implemented by a processor by executing a software instruction. The software instruction may include a corresponding software module. The software module may be stored in a RAM, a flash memory, a ROM, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium or write information into the storage medium. Certainly, the storage medium may be a component of the processor. The processor and the storage medium may be located in the ASIC. In addition, the ASIC may be located in a transceiver or a relay device. Certainly, the processor and the storage medium may exist in a radio access network device or a terminal device as discrete assemblies.

A person skilled in the art needs to be aware that in the foregoing one or more examples, functions described in the embodiments of this application may be implemented by hardware, software, firmware, or any combination thereof. When this application is implemented by software, the foregoing functions may be stored in a computer-readable medium or transmitted as one or more instructions or code in the computer-readable medium. The computer-readable medium includes a computer storage medium and a communications medium, and the communications medium includes any medium that enables a computer program to be transmitted from one place to another. The storage medium may be any available medium accessible to a general-purpose or dedicated computer.

In the foregoing specific implementations, the objectives, the technical solutions, and the beneficial effects of the embodiments of this application are further described in detail. It needs to be understood that the foregoing descriptions are merely specific implementations of the embodiments of this application, but are not intended to limit the protection scope of the embodiments of this application. Any modification, or improvement made based on the technical solutions of the embodiments of this application shall fall within the protection scope of the embodiments of this application. The scope of the invention is defined by the appended independent claims and further embodiments are described by the dependent claims.

## Claims

1. A channel sensing method, comprising:
performing (S101), by a sending device, LBT; and
sending (S102), by the sending device, a first channel occupancy signal after the LBT succeeds, wherein the first channel occupancy signal is used to indicate, to a first receiving device that receives the first channel occupancy signal, a to-be-protected channel occupancy time on a channel occupied by the sending device after the LBT succeeds,
wherein the first channel occupancy signal comprises first information, and the first information is used to indicate a part of the first receiving device to respond to the first channel occupancy signal, so that the first receiving device sends a second channel occupancy signal, and the second channel occupancy signal is used to indicate, to a second receiving device that receives the second channel occupancy signal, the to-be-protected channel occupancy time on the channel occupied by the sending device after the LBT succeeds.

2. The method according to claim 1, wherein the sending device obtains a maximum channel occupancy time MCOT after the LBT, the maximum channel occupancy time comprises one or more intervals, and the sending device sends the first channel occupancy signal before one of the one or more intervals.

3. The method according to claim 2 or 3, wherein the second channel occupancy signal is sent before one of the one or more intervals.

4. The method according to any one of claim 1 to 3, wherein the sending device sends a channel release signal, and the channel release signal is used to indicate the first receiving device or the second receiving device to release the to-be-protected channel occupancy time indicated by the first channel occupancy signal.

5. A channel sensing method, comprising:
receiving, by a receiving device, a first channel occupancy signal from a sending device, wherein the first channel occupancy signal is used to indicate, to the receiving device, a to-be-protected channel occupancy time on a channel occupied by the sending device after LBT succeeds,
wherein the first channel occupancy signal comprises first information, and the first information is used to indicate the receiving device to respond to the first channel occupancy signal, so that the receiving device sends (S103) a second channel occupancy signal based on the specific indication information, and the second channel occupancy signal is used to indicate, to one or more other receiving devices that receive the second channel occupancy signal, the to-be-protected channel occupancy time on the channel occupied by the sending device after the LBT succeeds.

6. The method according to claim 5, wherein the sending device obtains a maximum channel occupancy time MCOT after the LBT, the maximum channel occupancy time comprises one or more intervals, and the receiving device receives the first channel occupancy signal before one of the one or more intervals.

7. The method according to claim 5 or 6, wherein the second channel occupancy signal is sent before one of the one or more intervals.

8. The method according to claim 7, wherein the receiving device further receives a channel release signal from the sending device, and the channel release signal is used to indicate the one or more other receiving devices to release the to-be-protected channel occupancy time indicated by the first channel occupancy signal; and the receiving device sends a release acknowledgement signal in response to the release signal, and the release acknowledgement signal is used to indicate the one or more other receiving devices to release the to-be-protected channel occupancy time indicated by the second channel occupation signal.

9. A receiving device (400), comprising:
a memory (405) configured to store instructions; and
one or more processors (401) coupled with the memory (405), wherein the one or more processors (401) are configured to execute the instructions to cause the sending device perform the method of any one of claims 5 to 8.

10. A computer readable medium comprising instructions which, when executed by a computer, the method of any one of claims 1 to 4 is carried out.

11. A computer readable medium comprising instructions which, when executed by a computer, the method of any one of claims 5 to 8 is carried out.

12. A communications system, comprising a sending device (300) and a receiving device (400),
wherein the sending device (300) comprises a memory (312) configured to store instructions; and
one or more processors (304) coupled with the memory (312), wherein the one or more processors (304) are configured to execute the instructions to cause the sending device perform the method of any one of claims 1 to 4; and
wherein the receiving device is the receiving device according to claim 9.

## Patentansprüche

1. Kanalabhörverfahren, umfassend:
Durchführen (S101) von LBT durch eine Sendevorrichtung; und
Senden (S102) eines ersten Kanalbelegungssignals durch die Sendevorrichtung nach erfolgreichem LBT, wobei das erste Kanalbelegungssignal verwendet wird, um einer ersten Empfangsvorrichtung, die das erste Kanalbelegungssignal empfängt, eine zu schützende Kanalbelegungszeit auf einem von der Sendevorrichtung nach erfolgreichem LBT belegten Kanal anzuzeigen,
wobei das erste Kanalbelegungssignal erste Informationen umfasst und die ersten Informationen verwendet werden, um einem Teil der ersten Empfangsvorrichtung anzuzeigen, dass sie auf das erste Kanalbelegungssignal so reagieren soll, dass die erste Empfangsvorrichtung ein zweites Kanalbelegungssignal sendet, und das zweite Kanalbelegungssignal verwendet wird, um einer zweiten Empfangsvorrichtung, die das zweite Kanalbelegungssignal empfängt, die zu schützende Kanalbelegungszeit auf dem von der Sendevorrichtung nach erfolgreichem LBT belegten Kanal anzuzeigen.

2. Verfahren nach Anspruch 1, wobei die Sendevorrichtung nach dem LBT eine maximale Kanalbelegungszeit MCOT erhält, die maximale Kanalbelegungszeit ein oder mehrere Intervalle umfasst und die Sendevorrichtung das erste Kanalbelegungssignal vor einem Intervall des einen oder der mehren Intervalle sendet.

3. Verfahren nach Anspruch 2 oder 3, wobei das zweite Kanalbelegungssignal vor einem Intervall des einen oder der mehreren Intervalle gesendet wird.

4. Verfahren nach einem der Ansprüche 1 bis 3, wobei die Sendevorrichtung ein Kanalfreigabesignal sendet und das Kanalfreigabesignal verwendet wird, um der ersten Empfangsvorrichtung oder der zweiten Empfangsvorrichtung anzuzeigen, dass von ihr die zu schützende Kanalbelegungszeit, die durch das erste Kanalbelegungssignal angezeigt wird, freizugeben ist.

5. Kanalabhörverfahren, umfassend:
Empfangen eines ersten Kanalbelegungssignals von einer Sendevorrichtung durch eine Empfangsvorrichtung, wobei das erste Kanalbelegungssignal verwendet wird, um der Empfangsvorrichtung eine zu schützende Kanalbelegungszeit auf einem von der Sendevorrichtung nach erfolgreichem LBT belegten Kanal anzuzeigen,
wobei das erste Kanalbelegungssignal erste Informationen umfasst und die ersten Informationen verwendet werden, um der Empfangsvorrichtung anzuzeigen, dass sie auf das erste Kanalbelegungssignal so reagieren soll, dass die Empfangsvorrichtung basierend auf den spezifischen Anzeigeinformationen ein zweites Kanalbelegungssignal sendet (S103), und das zweite Kanalbelegungssignal verwendet wird, um einer oder mehreren anderen Empfangsvorrichtungen, die das zweite Kanalbelegungssignal empfangen, die zu schützende Kanalbelegungszeit auf dem von der Sendevorrichtung nach erfolgreichem LBT belegten Kanal anzuzeigen.

6. Verfahren nach Anspruch 5, wobei die Sendevorrichtung nach dem LBT eine maximale Kanalbelegungszeit MCOT erhält, die maximale Kanalbelegungszeit ein oder mehrere Intervalle umfasst und die Empfangsvorrichtung das erste Kanalbelegungssignal vor einem Intervall des einen oder der mehren Intervalle empfängt.

7. Verfahren nach Anspruch 5 oder 6, wobei das zweite Kanalbelegungssignal vor einem Intervall des einen oder der mehreren Intervalle gesendet wird.

8. Verfahren nach Anspruch 7, wobei die Empfangsvorrichtung ferner von der Sendevorrichtung ein Kanalfreigabesignal empfängt und das Kanalfreigabesignal verwendet wird, um der einen oder den mehreren anderen Empfangsvorrichtungen anzuzeigen, dass von ihnen die zu schützende Kanalbelegungszeit, die durch das erste Kanalbelegungssignal angezeigt wird, freizugeben ist; und die Empfangsvorrichtung als Reaktion auf das Freigabesignal ein Freigabebestätigungssignal sendet, und das Freigabebestätigungssignal verwendet wird, um der einen oder den mehreren anderen Empfangsvorrichtungen anzuzeigen, dass von ihnen die zu schützende Kanalbelegungszeit, die durch das zweite Kanalbelegungssignal angezeigt wird, freizugeben ist.

9. Empfangsvorrichtung (400), umfassend:
einen Speicher (405), der dazu konfiguriert ist, dass in ihm Anweisungen gespeichert werden; und
einen oder mehrere Prozessoren (401), die mit dem Speicher (405) gekoppelt sind, wobei der eine oder die mehreren Prozessoren (401) dazu konfiguriert sind, die Anweisungen auszuführen, um die Sendevorrichtung zu veranlassen, das Verfahren nach einem der Ansprüche 5 bis 8 durchzuführen.

10. Computerlesbares Medium, das Anweisungen umfasst, die, wenn sie durch einen Computer ausgeführt werden, veranlassen, dass das Verfahren nach einem der Ansprüche 1 bis 4 durchgeführt wird.

11. Computerlesbares Medium, das Anweisungen umfasst, die, wenn sie durch einen Computer ausgeführt werden, veranlassen, dass das Verfahren nach einem der Ansprüche 5 bis 8 durchgeführt wird.

12. Kommunikationssystem, umfassend eine Sendevorrichtung (300) und eine Empfangsvorrichtung (400),
wobei die Sendevorrichtung (300) einen Speicher (312) umfasst, der dazu konfiguriert ist, dass in ihm Anweisungen gespeichert werden; und
einen oder mehrere Prozessoren (304), die mit dem Speicher (312) gekoppelt sind, wobei der eine oder die mehreren Prozessoren (304) dazu konfiguriert sind, die Anweisungen auszuführen, um die Sendevorrichtung zu veranlassen, das Verfahren nach einem der Ansprüche 1 bis 4 durchzuführen; und
wobei die Empfangsvorrichtung die Empfangsvorrichtung nach Anspruch 9 ist.

## Revendications

1. Procédé de détection de canal, comprenant :
l'exécution (S101), par un dispositif d'envoi, d'un LBT ; et
l'envoi (S102), par le dispositif d'envoi, d'un premier signal d'occupation de canal après la réussite du LBT, dans lequel le premier signal d'occupation de canal est utilisé pour indiquer, à un premier dispositif de réception qui reçoit le premier signal d'occupation de canal, un temps d'occupation de canal à protéger sur un canal occupé par le dispositif d'envoi après la réussite du LBT,
dans lequel le premier signal d'occupation de canal comprend des premières informations, et les premières informations sont utilisées pour indiquer à une partie du premier dispositif de réception de répondre au premier signal d'occupation de canal, de sorte que le premier dispositif de réception envoie un second signal d'occupation de canal, et le second signal d'occupation de canal est utilisé pour indiquer, à un second dispositif de réception qui reçoit le second signal d'occupation de canal, le temps d'occupation de canal à protéger sur le canal occupé par le dispositif d'envoi après la réussite du LBT.

2. Procédé selon la revendication 1, dans lequel le dispositif d'envoi obtient un temps d'occupation de canal maximum, MCOT, après le LBT, le temps d'occupation de canal maximum comprend un ou plusieurs intervalles, et le dispositif d'envoi envoie le premier signal d'occupation de canal avant l'un des un ou plusieurs intervalles.

3. Procédé selon la revendication 2 ou 3, dans lequel le second signal d'occupation de canal est envoyé avant l'un des un ou plusieurs intervalles.

4. Procédé selon l'une quelconque des revendications 1 à 3, dans lequel le dispositif d'envoi envoie un signal de libération de canal, et le signal de libération de canal est utilisé pour indiquer au premier dispositif de réception ou au second dispositif de réception de libérer le temps d'occupation de canal à protéger indiqué par le premier signal d'occupation de canal.

5. Procédé de détection de canal, comprenant :
la réception, par un dispositif de réception, d'un premier signal d'occupation de canal provenant d'un dispositif d'envoi,
dans lequel le premier signal d'occupation de canal est utilisé pour indiquer, au dispositif de réception, un temps d'occupation de canal à protéger sur un canal occupé par le dispositif d'envoi après la réussite du LBT,
dans lequel le premier signal d'occupation de canal comprend des premières informations, et les premières informations sont utilisées pour indiquer au dispositif de réception de répondre au premier signal d'occupation de canal, de sorte que le dispositif de réception envoie (S103) un second signal d'occupation de canal sur la base des informations d'indication spécifiques, et le second signal d'occupation de canal est utilisé pour indiquer, à un ou plusieurs autres dispositifs de réception qui reçoivent le second signal d'occupation de canal, le temps d'occupation de canal à protéger sur le canal occupé par le dispositif d'envoi après que la réussite du LBT.

6. Procédé selon la revendication 5, dans lequel le dispositif d'envoi obtient un temps d'occupation de canal maximum, MCOT, après le LBT, le temps d'occupation de canal maximum comprend un ou plusieurs intervalles, et le dispositif de réception reçoit le premier signal d'occupation de canal avant l'un des un ou plusieurs intervalles.

7. Procédé selon la revendication 5 ou 6, dans lequel le second signal d'occupation de canal est envoyé avant l'un des un ou plusieurs intervalles.

8. Procédé selon la revendication 7, dans lequel le dispositif de réception reçoit en outre un signal de libération de canal provenant du dispositif d'envoi, et le signal de libération de canal est utilisé pour indiquer aux un ou plusieurs autres dispositifs de réception de libérer le temps d'occupation de canal à protéger indiqué par le premier signal d'occupation de canal ; et le dispositif de réception envoie un signal d'accusé de réception de libération en réponse au signal de libération, et le signal d'accusé de réception de libération est utilisé pour indiquer aux un ou plusieurs autres dispositifs de réception de libérer le temps d'occupation de canal à protéger indiqué par le second signal d'occupation de canal.

9. Dispositif de réception (400), comprenant :
une mémoire (405) configurée pour stocker des instructions ; et
un ou plusieurs processeurs (401) couplés à la mémoire (405), dans lequel les un ou plusieurs processeurs (401) sont configurés pour exécuter les instructions afin d'amener le dispositif d'envoi à exécuter le procédé selon l'une quelconque des revendications 5 à 8.

10. Support lisible par ordinateur comprenant des instructions qui, lorsqu'elles sont exécutées par un ordinateur, permettent de mettre en œuvre le procédé selon l'une quelconque des revendications 1 à 4.

11. Support lisible par ordinateur comprenant des instructions qui, lorsqu'elles sont exécutées par un ordinateur, permettent de mettre en œuvre le procédé selon l'une quelconque des revendications 5 à 8.

12. Système de communication, comprenant un dispositif d'envoi (300) et un dispositif de réception (400),
dans lequel le dispositif d'envoi (300) comprend une mémoire (312) configurée pour stocker des instructions ; et
un ou plusieurs processeurs (304) couplés à la mémoire (312), dans lequel les un ou plusieurs processeurs (304) sont configurés pour exécuter les instructions afin d'amener le dispositif d'envoi à exécuter le procédé selon l'une quelconque des revendications 1 à 4 ; et
dans lequel le dispositif de réception est le dispositif de réception selon la revendication 9.
